# EUROPEAN PATENT APPLICATION

(11) **EP 4 832 445 A1**
(43) Date of publication of application: **28.10.2026**
(21) Application number: 24916738.8
(22) Date of filing: 25.12.2024
(51) Int. Cl.: H04L 45/00, H04B 7/185

(54) **COMMUNICATION METHOD AND COMMUNICATION APPARATUS**

(30) Priority: 12.01.2024 CN 202410054748
(71) Applicant: Huawei Technologies Co., Ltd., Shenzhen, Guangdong 518129 (CN)
(72) Inventor: DOU, Fenghui, Shenzhen, Guangdong 518129 (CN)
(74) Representative: Goddar, Heinz J.
(86) International application number: PCT/CN2024/142291
(87) International publication number: WO 2025/148691

(57) **Abstract**

This application provides a communication method and a communication apparatus. The method may include: A first network element in an IMS (for example, a P-CSCF network element in the IMS) receives a first request message from a first terminal. The first request message is used to request to create a call with a second terminal. The first network element in the IMS sends a second request message to an access gateway deployed on a satellite in a first network, to request a first access gateway to allocate a transport resource for transmission of media data between the first terminal and the second terminal. Both the first terminal and the second terminal accesses a network via a satellite. Based on this, the media data between the first terminal and the second terminal may not transit through the ground. In this way, a delay of a satellite call is shortened, and user experience is improved.

## Description

This application claims priority to Chinese Patent Application No. 202410054748.3, filed with the China National Intellectual Property Administration on January 12, 2024 and entitled "COMMUNICATION METHOD AND COMMUNICATION APPARATUS", which is incorporated herein by reference in its entirety.

### TECHNICAL FIELD

This application relates to the field of wireless communication, and more specifically, to a communication method and a communication apparatus.

### BACKGROUND

Compared with a terrestrial network, a satellite network has unique advantages. For example, the satellite network can provide a wider coverage area, for example, can provide a communication service for an area that cannot be covered by the terrestrial network, such as an ocean or a forest. For another example, the satellite network is less likely vulnerable to a natural disaster or external force. Supporting satellite communication has become one of important functions of terminal devices (for example, a mobile phone), and performing a call service via a satellite has become a basic requirement.

Currently, when a terminal device accesses a network via a satellite to perform a call service, call data needs to be routed to a terrestrial network. This not only cause an increase in a delay and affects user experience, but also causes a call failure when the terrestrial network is faulty.

### SUMMARY

This application provides a communication method and a communication apparatus, so that when a terminal device accesses a network via a satellite, call data can be directly exchanged on the satellite without transiting through the ground. This shortens a delay of a satellite call and improves user experience.

According to a first aspect, a communication method is provided. The method may be performed by an apparatus. The apparatus may be a network element, or may be a component (for example, a chip, a chip system, or a circuit) of the network element. This is not limited in this application. The network element is used as an example below for description. The method may include: A first network element in an internet protocol multimedia subsystem (IMS) receives a first request message from a first terminal. The first request message is used to request to create a session with a second terminal. The first network element in the IMS sends a second request message to a first gateway in the IMS. The second request message is used to request a transport resource, and the transport resource is used for transmission of media data between the first terminal and the second terminal. The first gateway is deployed on a satellite, and both the first terminal and the second terminal use satellite access.

Optionally, the first network element is a session control network element in the IMS, or a functional module in the session control network element.

According to the foregoing technical solution, after receiving the request message of the first terminal using the satellite access, the first network element in the IMS (for example, the session control network element in the IMS) may determine, for the first terminal, the gateway deployed on the satellite, and request the gateway to allocate the transport resource for the media data of the first terminal (or the media data between the first terminal and the second terminal). In this way, the gateway deployed on the satellite may directly perform transmission of the media data between the first terminal and the second terminal, that is, the media data between the first terminal and the second terminal may not transit through the ground (or not transit through a gateway on the ground). In this way, a delay of a satellite call is shortened, and user experience is improved.

With reference to the first aspect, in some implementations of the first aspect, the media data between the first terminal and the second terminal does not transit through a gateway deployed on a ground in the IMS.

With reference to the first aspect, in some implementations of the first aspect, that the first network element in the IMS sends the second request message to the first gateway in the IMS includes at least one of the following: When the first terminal uses satellite access, the first network element in the IMS sends the second request message to the first gateway in the IMS; or the first network element in the IMS sends the second request message to the first gateway in the IMS based on subscription information of the first terminal or when media data of the first terminal is allowed not to transit through the gateway deployed on the ground, where the subscription information of the first terminal indicates that the media data of the first terminal is allowed not to transit through the ground and/or the first terminal uses satellite access.

According to the foregoing technical solution, the first network element in the IMS may request, when determining that a specific condition is met, the gateway deployed on the satellite to allocate the transport resource, to avoid a waste of resources.

With reference to the first aspect, in some implementations of the first aspect, the method further includes: The first network element in the IMS receives a registration request message from the first terminal. The registration request message is used to request to register with the IMS. The first network element in the IMS sends the registration request message to a second network element in the IMS. The first network element in the IMS receives a registration response message from the second network element in the IMS. The registration response message includes the subscription information of the first terminal.

According to the foregoing technical solution, the first network element in the IMS may obtain the subscription information of the terminal in a registration procedure (that is, registration with the IMS) of the terminal, and directly read the subscription information during use, to reduce a call delay.

With reference to the first aspect, in some implementations of the first aspect, the method further includes: The first network element in the IMS receives a first response message. The first response message indicates that the media data between the first terminal and the second terminal does not transit through a gateway deployed on the ground.

Optionally, the first network element in the IMS receives the first response message from a second terminal side. For example, the second terminal side includes at least one of the following: the second terminal or a network element (for example, a P-CSCF network element or an S-CSCF network element) in a network in which the second terminal is located. This is not limited herein.

With reference to the first aspect, in some implementations of the first aspect, the method further includes: The first network element in the IMS sends a third request message to a second gateway in the IMS. The third request message is used to request a transport resource, the transport resource is used for transmission of the media data between the first terminal and the second terminal, and the second gateway is deployed on the ground.

With reference to the first aspect, in some implementations of the first aspect, the method further includes: releasing the second gateway based on the first response message.

According to the foregoing technical solution, after receiving the first request message from the first terminal, the first network element in the IMS may further determine, for the first terminal, the gateway deployed on the ground. In this way, if the first terminal cannot communicate with the second terminal via the gateway deployed on the satellite, the first terminal may communicate with the second terminal directly via an access network element on the ground, to reduce a delay.

With reference to the first aspect, in some implementations of the first aspect, at least one network element in the IMS is deployed in a visited network, the at least one network element includes the first network element and a border control network element, and at least one third network element in the IMS is deployed in a home network. The method further includes: The first network element in the IMS sends the first request message to the border control network element, to request the border control network element to determine, for the first terminal, a gateway deployed on the ground.

The visited network is a visited network of the first terminal, and the home network is a home network of the first terminal.

With reference to the first aspect, in some implementations of the first aspect, at least one network element in the IMS is deployed in a visited network, the at least one network element includes the first network element, and at least one third network element in the IMS is deployed in a home network. The method further includes: The first network element in the IMS sends first indication information to a network element in the at least one third network element. The first indication information indicates that visited network routing is performed on the media data between the first terminal and the second terminal.

Optionally, the first network element in the IMS sends the first indication information to the network element in the home network of the first terminal via another network element (for example, another network element in the IMS).

With reference to the first aspect, in some implementations of the first aspect, the method further includes: The first network element in the IMS sends second indication information to a network element in a first network. The second indication information indicates whether the media data between the first terminal and the second terminal transits through the gateway deployed on the ground.

According to the foregoing technical solution, the media data between the first terminal and the second terminal can be exchanged on a satellite through configuration of a core network.

With reference to the first aspect, in some implementations of the first aspect, that the first network element in the IMS sends the second indication information to the network element in the first network includes at least one of the following: When the first terminal uses satellite access, the first network element in the IMS sends the second indication information to the network element in the first network; or the first network element in the IMS sends the second indication information to the network element in the first network based on the subscription information of the first terminal or when the media data of the first terminal is allowed not to transit through the gateway deployed on the ground, where the subscription information of the first terminal indicates that the media data of the first terminal is allowed not to transit through the ground and/or the first terminal uses satellite access; or when the first terminal and the second terminal are served by a same policy control network element and/or session control network element, the first network element in the IMS sends the second indication information to the network element in the first network.

Optionally, the network element in the first network is a core network element.

According to the foregoing technical solution, the first network element in the IMS may send the second indication information to the network element in the first network when a specific condition is met, or send the second indication information to the network element in the first network when determining that the first terminal and the second terminal are served by the same policy control network element and/or session control network element. In this way, a possibility that the network element in the first network successfully configures the media data between the first terminal and the second terminal to be exchanged on the satellite can be improved.

With reference to the first aspect, in some implementations of the first aspect, the first terminal and the second terminal meet any one of the following: The first terminal and the second terminal are served by a same satellite; or the first terminal and the second terminal are served by different satellites, and there is an inter-satellite link between the different satellites.

With reference to the first aspect, in some implementations of the first aspect, the method further includes: when transmission of the media data between the first terminal and the second terminal is performed via the first gateway, sending a second response message to the first terminal, where the second response message includes an address of the first gateway.

With reference to the first aspect, in some implementations of the first aspect, the first network element in the IMS is deployed on the satellite.

With reference to the first aspect, in some implementations of the first aspect, the IMS is an internet protocol multimedia subsystem IMS, and/or the first network element in the IMS is a session control network element in the IMS.

According to a second aspect, a communication method is provided. The method may be performed by an apparatus. The apparatus may be a network element, or may be a component (for example, a chip, a chip system, or a circuit) of the network element. This is not limited in this application. The network element is used as an example below for description. The method may include: A first network element in a second network receives a first request message from a first terminal via a first network. The first request message is used to request to create a session with a second terminal. The first network element in the second network sends a second request message to a first gateway in the second network. The second request message is used to request a transport resource, and the transport resource is used for transmission of media data between the first terminal and the second terminal. The first gateway is deployed on a satellite, and both the first terminal and the second terminal use satellite access.

Optionally, the second network is a network that provides a service for the terminal, for example, provides a multimedia service for the terminal. For example, the second network is an internet protocol (internet protocol, IP) multimedia subsystem (IP multimedia subsystem, IMS). Further, optionally, the first network element is a network element in the IMS, for example, a session control network element in the IMS, or a functional module in the session control network element.

Optionally, the first network is configured to establish a connection between the second network (for example, the IMS) and the terminal, that is, the terminal can communicate with the second network.

Optionally, the first network is an IP connectivity access network (IP connectivity access network, IP-CAN). For example, the first network is an evolved packet system (evolved packet system, EPS) or a 5G system (5th generation system, 5GS).

With reference to the second aspect, in some implementations of the second aspect, the media data between the first terminal and the second terminal does not transit through a gateway deployed on a ground in the second network.

With reference to the second aspect, in some implementations of the second aspect, that the first network element in the second network sends the second request message to the first gateway in the second network includes at least one of the following: When the first terminal uses satellite access, the first network element in the second network sends the second request message to the first gateway in the second network; or the first network element in the second network sends the second request message to the first gateway in the second network based on subscription information of the first terminal or when media data of the first terminal is allowed not to transit through the gateway deployed on the ground, where the subscription information of the first terminal indicates that the media data of the first terminal is allowed not to transit through the ground and/or the first terminal uses satellite access.

With reference to the second aspect, in some implementations of the second aspect, the method further includes: The first network element in the second network receives a registration request message from the first terminal via the first network. The registration request message is used to request to register with the second network. The first network element in the second network sends the registration request message to a second network element in the second network. The first network element in the second network receives a registration response message from the second network element in the second network. The registration response message includes the subscription information of the first terminal.

With reference to the second aspect, in some implementations of the second aspect, the method further includes: The first network element in the second network receives a first response message. The first response message indicates that the media data between the first terminal and the second terminal does not transit through a gateway deployed on the ground.

Optionally, the first network element in the second network receives the first response message from a second terminal side.

With reference to the second aspect, in some implementations of the second aspect, the method further includes: The first network element in the second network sends a third request message to a second gateway in the second network. The third request message is used to request a transport resource, the transport resource is used for transmission of the media data between the first terminal and the second terminal, and the second gateway is deployed on the ground.

With reference to the second aspect, in some implementations of the second aspect, the method further includes: releasing the second gateway when the media data between the first terminal and the second terminal is allowed not to transit through the second gateway.

With reference to the second aspect, in some implementations of the second aspect, at least one network element in the second network is deployed in a visited network, the at least one network element includes the first network element and a border control network element, and at least one third network element in the second network is deployed in a home network. The method further includes: The first network element in the second network sends the first request message to the border control network element, to request the border control network element to determine, for the first terminal, a gateway deployed on the ground.

With reference to the second aspect, in some implementations of the second aspect, at least one network element in the second network is deployed in a visited network, the at least one network element includes the first network element, and at least one third network element in the second network is deployed in a home network. The method further includes: The first network element in the second network sends first indication information to a network element in the at least one third network element. The first indication information indicates that visited network routing is performed on the media data between the first terminal and the second terminal.

With reference to the second aspect, in some implementations of the second aspect, the method further includes: The first network element in the second network sends second indication information to the first network. The second indication information indicates whether the media data between the first terminal and the second terminal transits through the gateway deployed on the ground.

Optionally, the first network element in the second network sends the second indication information to a network element in the first network.

With reference to the second aspect, in some implementations of the second aspect, that the first network element in the second network sends the second indication information to the first network includes at least one of the following: When the first terminal uses satellite access, the first network element in the second network sends the second indication information to the first network; or the first network element in the second network sends the second indication information to the first network based on the subscription information of the first terminal or when the media data of the first terminal is allowed not to transit through the gateway deployed on the ground, where the subscription information of the first terminal indicates that the media data of the first terminal is allowed not to transit through the ground and/or the first terminal uses satellite access; or when the first terminal and the second terminal are served by a same policy control network element and/or session control network element, the first network element in the second network sends the second indication information to the first network.

With reference to the second aspect, in some implementations of the second aspect, the first terminal and the second terminal meet any one of the following: The first terminal and the second terminal are served by a same satellite; or the first terminal and the second terminal are served by different satellites, and there is an inter-satellite link between the different satellites.

With reference to the second aspect, in some implementations of the second aspect, the method further includes: When transmission of the media data between the first terminal and the second terminal is performed via the first gateway, the first network element in the second network sends a second response message to the first terminal via the first network. The second response message includes an address of the first gateway.

With reference to the second aspect, in some implementations of the second aspect, the first network element in the second network is deployed on the satellite.

With reference to the second aspect, in some implementations of the second aspect, the second network is an internet protocol multimedia subsystem IMS, and/or the first network element in the second network is a session control network element in the IMS.

According to a third aspect, a communication method is provided. The method may be performed by an apparatus. The apparatus may be a network element, or may be a component (for example, a chip, a chip system, or a circuit) of the network element. This is not limited in this application. A network element in a first network is used as an example below for description. The method may include: The network element in the first network receives second indication information from a network element in a second network. The second indication information indicates whether media data between a first terminal and a second terminal transits through a gateway deployed on a ground. The network element in the first network sends a response message to the network element in the second network. The response message indicates that transmission of the media data between the first terminal and the second terminal is performed via a gateway deployed on a satellite, or the response message indicates that transmission of the media data between the first terminal and the second terminal is performed via the gateway deployed on the ground.

For the first network, refer to the related descriptions in the second aspect. Details are not described herein again.

With reference to the third aspect, in some implementations of the third aspect, both the first terminal and the second terminal use satellite access.

With reference to the third aspect, in some implementations of the third aspect, when the first terminal and the second terminal are served by a same policy control network element, the response message indicates that transmission of the media data between the first terminal and the second terminal is performed via the gateway deployed on the satellite; or when the first terminal and the second terminal are served by a same user plane network element, the response message indicates that transmission of the media data between the first terminal and the second terminal is performed via the gateway deployed on the satellite; or when there is an inter-satellite link between the first terminal and the second terminal, the response message indicates that transmission of the media data between the first terminal and the second terminal is performed via the gateway deployed on the satellite.

According to a fourth aspect, a communication method is provided. The method may be performed by an apparatus. The apparatus may be a network element, or may be a component (for example, a chip, a chip system, or a circuit) of the network element. This is not limited in this application. The network element is used as an example below for description. The method may include: A first network element in an IMS receives a first request message from a first terminal. The first request message is used to request to create a session with a second terminal. The first network element in the IMS sends a second request message to a first gateway. The second request message is used to request a transport resource, and the transport resource is used for transmission of media data between a first terminal device and a second terminal device. The first gateway is deployed on a satellite, and both the first terminal and the second terminal use satellite access. In response to the second request message, the first gateway allocates the transport resource to the media data between the first terminal device and the second terminal device.

For a related solution of the first network element in the IMS, refer to the related descriptions in the first aspect.

According to a fifth aspect, a communication method is provided. The method may be performed by an apparatus. The apparatus may be a network element, or may be a component (for example, a chip, a chip system, or a circuit) of the network element. This is not limited in this application. The network element is used as an example below for description. The method may include: A first network element in a second network receives a first request message from a first terminal via a first network. The first request message is used to request to create a session with a second terminal. The first network element in the second network sends a second request message to a first gateway. The second request message is used to request a transport resource, and the transport resource is used for transmission of media data between a first terminal device and a second terminal device. The first gateway is deployed on a satellite, and both the first terminal and the second terminal use satellite access. In response to the second request message, the first gateway allocates the transport resource to the media data between the first terminal device and the second terminal device.

For a related solution of the first network element in the second network, refer to the related descriptions in the second aspect.

According to a sixth aspect, a communication method is provided. The method may be performed by an apparatus. The apparatus may be a gateway, or may be a component (for example, a chip, a chip system, or a circuit) of the gateway. This is not limited in this application. The gateway is used as an example below for description. The method may include: A first gateway in an IMS receives media data from a first terminal. The first gateway in the IMS sends the media data to a second terminal over an inter-satellite link. The first gateway is deployed on a satellite, and both the first terminal and the second terminal use satellite access.

With reference to the sixth aspect, in some implementations of the sixth aspect, before the first gateway in the IMS receives the media data from the first terminal, the method further includes: The first gateway in the IMS receives a second request message from a first network element in the IMS. The second request message is used to request a transport resource, and the transport resource is used for transmission of the media data between the first terminal device and the second terminal device.

According to a seventh aspect, a communication method is provided. The method may be performed by an apparatus. The apparatus may be a network element, or may be a component (for example, a chip, a chip system, or a circuit) of the network element. This is not limited in this application. A network element in a home network is used as an example below for description. The method may include: receiving a session call message from a first terminal; and determining that visited network routing or loopback is performed on media data between the first terminal and a second terminal, where both the first terminal and the second terminal use satellite access.

With reference to the seventh aspect, in some implementations of the seventh aspect, the media data between the first terminal and the second terminal transits through a first gateway and does not transit through a ground, and the first gateway is deployed on a satellite.

With reference to the seventh aspect, in some implementations of the seventh aspect, the determining that visited network routing or loopback is performed on the media data between the first terminal and the second terminal includes: determining, based on subscription information of the first terminal, that visited network routing or loopback is performed on the media data between the first terminal and the second terminal; and/or receiving indication information from a network element in a visited network, and determining, based on the indication information, that visited network routing or loopback is performed on the media data between the first terminal and the second terminal.

According to an eighth aspect, an apparatus is provided. The apparatus is deployed on a satellite, and the apparatus includes a first gateway in an IMS. The first gateway is deployed on the satellite, and the first gateway is configured to perform transmission of media data between terminals using satellite access.

For the first gateway, refer to the related descriptions in the first aspect or the sixth aspect.

With reference to the eighth aspect, in some implementations of the eighth aspect, the apparatus further includes a first network element in the IMS, and the first network element in the IMS communicates with the first gateway.

For the first network element in the IMS, refer to the related descriptions in the first aspect.

With reference to the eighth aspect, in some implementations of the eighth aspect, the apparatus further includes a user plane network element in a first network, or the apparatus further includes the user plane network element in the first network and an access network element in the first network. The terminal communicates with the first network via the user plane network element and/or the access network element. For example, the terminal sends registration information to the first network via the user plane network element or the access network element. The registration information may be sent to a second network (for example, an IMS network) via another network element in the first network. The first network may be a 4G or 5G communication network.

For the second aspect to the eighth aspect, refer to the descriptions of the first aspect, for example, the descriptions of the implementations and corresponding technical effects of the first aspect. Details are not described herein again.

According to a ninth aspect, a communication apparatus is provided. The apparatus is configured to perform the method according to any one of the possible implementations of the first aspect to the eighth aspect. Specifically, the apparatus may include units and/or modules, for example, a processing unit and/or a communication unit, configured to perform the method according to any one of the possible implementations of the first aspect to the eighth aspect.

In an implementation, the apparatus is a communication device (for example, a first network element, a first gateway, or a core network element). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device (for example, the first network element, the first gateway, or the core network element). When the apparatus is the chip, the chip system, or the circuit used in the communication device, a communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a tenth aspect, a communication apparatus is provided. The apparatus includes at least one processor, configured to execute a computer program or instructions stored in a memory, to perform the method according to any one of the possible implementations of the first aspect to the eighth aspect. Optionally, the apparatus further includes the memory, configured to store the computer program or the instructions. Optionally, the apparatus further includes a communication interface, and the processor reads, through the communication interface, the computer program or the instructions in the memory.

In an implementation, the apparatus is a communication device (for example, a first network element, a first gateway, or a core network element).

In another implementation, the apparatus is a chip, a chip system, or a circuit used in the communication device (for example, the first network element, the first gateway, or the core network element).

According to an eleventh aspect, a processor is provided, and is configured to perform the methods according to the first aspect to the eighth aspect.

Operations such as sending and obtaining/receiving related to the processor may be understood as operations such as output and receiving or input of the processor, or sending and receiving operations performed by a radio frequency circuit and an antenna, unless otherwise specified, or provided that the operations do not contradict actual functions or internal logic of the operations in related descriptions. This is not limited in this application.

Optionally, the apparatus further includes a memory, configured to store a program. Correspondingly, at least one processor is configured to execute a computer program or instructions in the memory.

Optionally, the apparatus further includes a communication interface. The communication interface is coupled to the processor, and may be configured to input information to the processor or output information in the processor.

According to a twelfth aspect, a computer-readable storage medium is provided. The computer-readable medium stores program code to be executed by a device, and the program code includes instructions used for performing the method according to any one of the possible implementations of the first aspect to the eighth aspect.

According to a thirteenth aspect, a computer program product including instructions is provided. When the computer program product runs on a computer, the computer is caused to perform the method according to any one of the possible implementations of the first aspect to the eighth aspect.

According to a fourteenth aspect, a chip is provided. The chip includes a processor and a communication interface. The processor reads, through the communication interface, instructions in a memory, to perform the method according to any one of the foregoing implementations of any one of the first aspect to the eighth aspect.

Optionally, in an implementation, the chip further includes the memory. The memory stores a computer program or the instructions. The processor is configured to execute the computer program or the instructions in the memory. When the computer program or the instructions are executed, the processor is configured to perform the method according to any one of the foregoing implementations of any one of the first aspect to the eighth aspect.

According to a fifteenth aspect, a computer program product including instructions is provided. When the computer program product runs on a computer, the computer is caused to perform the method according to any one of the foregoing implementations of the first aspect.

According to a sixteenth aspect, a communication system is provided, and includes at least one of the foregoing first network element, first gateway, network element in the first network, user plane network element in the first network, and/or access network element in the first network.

### BRIEF DESCRIPTION OF DRAWINGS

FIG. 1 is a diagram of a network architecture applicable to an embodiment of this application;
FIG. 2 is a diagram of another network architecture applicable to an embodiment of this application;
FIG. 3(a) to FIG. 3(c) are a diagram of another network architecture applicable to an embodiment of this application;
FIG. 4(a) to FIG. 4(d) are a diagram of a network architecture according to an embodiment of this application;
FIG. 5 is a diagram of a communication method 500 according to an embodiment of this application;
FIG. 6 is a diagram of performing IMS registration by a UE according to an embodiment of this application;
FIG. 7 is another diagram of performing IMS registration by a UE according to an embodiment of this application;
FIG. 8 is a diagram of a communication method 800 according to an embodiment of this application;
FIG. 9 is a schematic flowchart of a communication method 900 applicable to an embodiment of this application;
FIG. 10 is a schematic flowchart of a communication method 1000 applicable to an embodiment of this application;
FIG. 11 is a schematic flowchart of a communication method 1100 applicable to an embodiment of this application;
FIG. 12A to FIG. 12C are a schematic flowchart of a communication method 1200 applicable to an embodiment of this application;
FIG. 13A and FIG. 13B are a schematic flowchart of a communication method 1300 applicable to an embodiment of this application;
FIG. 14 is a diagram of an optimal media routing (optimal media routing, OMR) mechanism applicable to an embodiment of this application;
FIG. 15 is a diagram of a communication apparatus 1500 according to an embodiment of this application;
FIG. 16 is a diagram of another communication apparatus 1600 according to an embodiment of this application; and
FIG. 17 is a diagram of a chip system 1700 according to an embodiment of this application.

### DESCRIPTION OF EMBODIMENTS

The following describes technical solutions of this application with reference to accompanying drawings.

The technical solutions provided in this application may be applied to a non-terrestrial communication network (non-terrestrial network, NTN) system such as inter-satellite communication and satellite communication. For example, a satellite communication system includes a satellite base station and a terminal device. The satellite base station provides a communication service for the terminal device. The satellite base station may also communicate with a base station. A satellite may be used as a base station, or may be used as a terminal device. The satellite may be an uncrewed aerial vehicle, a hot air balloon, a low Earth orbit satellite, a medium Earth orbit satellite, a high Earth orbit satellite, or the like. Alternatively, the satellite may be a non-terrestrial base station, a non-terrestrial device, or the like.

The technical solutions provided in this application may be further applied to various communication systems, for example, a 5th generation (5th generation, 5G) or new radio (new radio, NR) system or a long term evolution (long term evolution, LTE) system. The technical solutions provided in this application may be further applied to a future communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), and an internet of things (internet of things, IoT) communication system. For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

A device in a communication system may send a signal to another device or receive a signal from another device. The signal may include information, signaling, data, or the like. The device may alternatively be replaced with an entity, a network entity, a network element, a gateway, a communication device, a communication module, a node, a communication node, or the like.

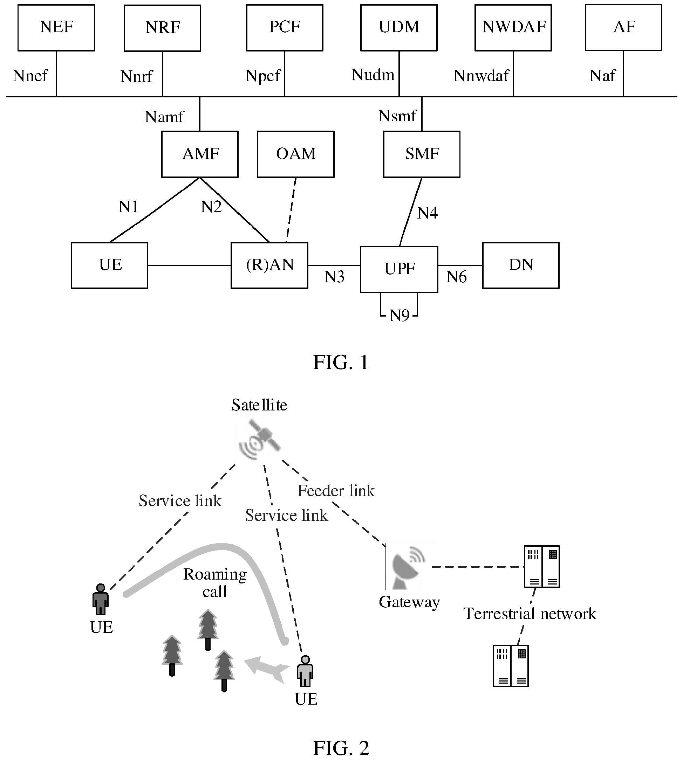

The following describes, with reference to FIG. 1 to FIG. 4(d), network architectures applicable to embodiments of this application.

FIG. 1 is a diagram of a network architecture applicable to an embodiment of this application.

As shown in FIG. 1, a 5G system (5th generation system, 5GS) is used as an example of the network architecture. The network architecture may be divided into two parts: an access network and a core network. The network architecture may include but is not limited to: a unified data management (unified data management, UDM), a network exposure function (network exposure function, NEF), a network repository function (network repository function, NRF), a policy control function (policy control function, PCF), an application function (application function, AF), an access and mobility management function (access and mobility management function, AMF), a session management function (session management function, SMF), a user equipment (user equipment, UE), a radio access network device, a UPF, and a data network (data network, DN). The DN may be an internet. The UDM, the NEF, the NRF, the PCF, the AF, the AMF, the SMF, and the UPF are network elements in the core network. Because the 5G system is used as an example in FIG. 1, the core network may be referred to as a 5G core network (5G core network, 5GC or 5GCN).

The network elements are briefly described below.
1. The UE may be referred to as a terminal device, an access terminal, a subscriber unit, a subscriber station, a mobile station, a remote station, a remote terminal, a mobile device, a user terminal, a terminal, a wireless communication device, a user agent, or a user apparatus. The terminal device is used as an example below for description.

The terminal device includes various devices having a wireless communication function, and may be configured to connect a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, self-driving, telemedicine, smart grid, smart furniture, smart office, smart wearable, smart transportation, smart city, uncrewed aerial vehicle, robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device; an apparatus built in the foregoing device (for example, a communication module, a modem, or a chip in the foregoing device); or another processing device connected to the wireless modem. For ease of description, an example in which the terminal device is a terminal or a UE is used below for description.

It should be understood that, in some scenarios, the UE may be further configured to serve as a base station. For example, the UE may serve as a scheduling entity that provides a sidelink signal between UEs in a scenario like V2X, D2D, or P2P.

In embodiments of this application, an apparatus configured to implement a function of the terminal device, namely, a terminal apparatus, may be a terminal device; or may be an apparatus that can support the terminal device in implementing the function, for example, a chip system or a chip, where the apparatus may be mounted in the terminal device. In embodiments of this application, the chip system may include a chip, or may include the chip and another discrete component.

The terminal device may be deployed on land, including indoor, outdoor, handheld, or in-vehicle; or may be deployed on a water surface; or may be deployed on an airplane, a balloon, and a satellite in the air. A scenario in which the terminal device is located is not limited in embodiments of this application. In addition, the terminal device may be a hardware device, or may be a software function running on dedicated hardware or a software function running on general-purpose hardware, for example, a virtual function instantiated on a platform (for example, a cloud platform) or an entity including a dedicated or general-purpose hardware device and a software function. A specific form of the terminal device is not limited in this application.

2. A (radio) access network ((radio) access network, (R)AN) may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network.

The RAN can manage a radio resource and provide an access service for a user equipment, to complete forwarding of a control signal and user equipment data between the user equipment and the core network. The RAN may also be understood as a base station in a conventional network.

For example, an access network device in embodiments of this application may be any communication device having a wireless transceiver function for communicating with the user equipment. The access network device includes but is not limited to: an evolved NodeB (evolved NodeB, eNB), a baseband unit (baseband unit, BBU), and an access point (access point, AP), a wireless relay node, a wireless backhaul node, a transmission point (transmission point, TP), or a transmission reception point (transmission and reception point, TRP) in a wireless fidelity (wireless fidelity, Wi-Fi) system, or the like; or may be a gNB or a transmission point (TRP or TP) in a 5G system, for example, an NR system, or one or a group of antenna panels (including a plurality of antenna panels) of a base station in the 5G system; or may be a network node included in the gNB or the transmission point, for example, a baseband unit (BBU) or a distributed unit (distributed unit, DU).

In some deployments, the gNB may include a central unit (centralized unit, CU) and a DU. The gNB may further include an active antenna unit (active antenna unit, AAU). The CU implements a part of functions of the gNB, and the DU implements a part of the functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling like RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

In different systems, the CU (or a CU-CP and a CU-UP), the DU, or an RU may also have different names, but a person skilled in the art may understand meanings thereof. For example, in an open-radio access network (open-radio access network, O-RAN) system, the CU may also be referred to as an open-central unit (open-central unit, O-CU) (open CU), the DU may also be referred to as an open-distributed unit (open-distributed unit, O-DU) (open DU), the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

In embodiments of this application, an apparatus configured to implement a function of the RAN may be a device; or may be an apparatus that can support the device in implementing the function, for example, a chip system or a chip, where the apparatus may be mounted in the device. In embodiments of this application, the chip system may include a chip, or may include the chip and another discrete component. In embodiments of this application, an example in which the apparatus for implementing the function of the device is a device is merely used for description, and constitutes no limitation on the solutions in embodiments of this application.

The RAN may be deployed on land, including indoor, outdoor, handheld, or in-vehicle; or may be deployed on a water surface; or may be deployed on an airplane, a balloon, and a satellite in the air. A scenario in which the RAN is located is not limited in embodiments of this application. In addition, the RAN may be a hardware device, or may be a software function running on dedicated hardware or a software function running on general-purpose hardware, for example, a virtual function instantiated on a platform (for example, a cloud platform) or an entity including a dedicated or general-purpose hardware device and a software function. A specific form of the RAN is not limited in this application.

3. The UPF network element is configured for packet routing and forwarding, quality of service (quality of service, QoS) handling for user plane data, and the like. User data may be accessed to a data network (data network, DN) via the network element. In embodiments of this application, the UPF network element may be configured to implement a function of a user plane network element.

4. The data network (data network, DN) is configured to provide a network for data transmission, for example, a network (for example, an IP multimedia subsystem (IP multimedia subsystem, IMS)) of an operator service, an internet (Internet), or a third-party service network.

5. An operations, administration, and management (operations, administration, and management, OAM) network element is mainly configured for analysis, prediction, planning, and configuration of a network and a service, and testing and fault management of the network and the service thereof.

6. The access and mobility management function (access and mobility management function, AMF) network element is mainly configured for mobility management, access management, and the like, and may be further configured to implement a function other than session management in functions of a mobility management entity (mobility management entity, MME), for example, a function of access authorization/authentication.

7. The session management function (session management function, SMF) network element is mainly configured for session management, internet protocol (internet protocol, IP) address allocation and management of the terminal device, selection and control of a user plane function, termination of interfaces towards the policy control function, downlink data notification, and the like.

8. The policy control function (policy control function, PCF) network element is configured to: support a unified policy framework configured to govern network behavior, and provide policy rules for a network element (for example, the AMF network element or the SMF network element) or the terminal device.

9. The network repository function (network repository function, NRF) network element is configured to store profiles of a network functional entity and a service provided by the network functional entity, and support functions such as service discovery and network element entity discovery.

10. The network exposure function (network exposure function, NEF) network element is mainly configured to securely expose, to the outside, a service, a capability, and the like that are provided by a 3rd generation partnership project (3GPP) network function.

11. The unified data management (unified data management, UDM) network element is configured for unified data management, 5G user data management, user identification handling, access authentication, registration, mobility management, or the like.

12. The application function (application function, AF) network element is configured to: support application function influence on traffic routing, access the network exposure function network element, interact with the policy framework to perform policy control, or the like.

13. The network data analytics function (network data analytics function, NWDAF) network element has data collection, training, analytics, and inference functions, and may be configured to collect related data from a network element, a third-party service server, a terminal device, or a network management system, perform analytics and training based on the related data, and provide a data analytics result for the network element, the third-party service server, the terminal device, or the network management system. The analysis result may assist a network in selecting a quality of service parameter of a service, or assist the network in performing traffic routing, or assist the network selecting a background data transfer policy, or the like.

In embodiments of this application, the NWDAF may be an independent network element, or may be co-located with another network element. For example, the NWDAF network element may be co-located with the AMF or co-located with the SMF.

It may be understood that the foregoing enumerated network elements included in the communication system are merely examples for description, and this application is not limited thereto.

In the foregoing network architecture, an N2 interface is an interface between the RAN and the AMF network element, and is configured to send a radio parameter or non-access stratum (non-access stratum, NAS) signaling, and the like. An N3 interface is an interface between the RAN and the UPF network element, and is configured for transmission of user plane data and the like. An N4 interface is an interface between the SMF network element and the UPF network element, and is configured for transmission of information such as a service policy, tunnel identification information of an N3 connection, data buffer indication information, and a downlink data notification message. An N6 interface is an interface between the DN network element and the UPF network element, and is configured for transmission of user plane data or the like. It may be understood that, in the foregoing network architecture, information may be exchanged between network elements through a service-based interface (for example, Namf, Nsmf, or Nnwdaf).

FIG. 2 is a diagram of another network architecture applicable to an embodiment of this application.

As shown in FIG. 2, an NTN is used as an example of the network architecture. For example, the network architecture may include a terrestrial station (gateway, GW), a satellite (satellite), a terminal device, a ground network (ground network), and the like. For distinction from a terrestrial communication system, the "gateway" is referred to as a terrestrial station herein. The terrestrial station can provide a function similar to that of a gateway in the terrestrial communication system, for example, establishing a connection to the terminal device or communicating with a server. The terrestrial station further has functions such as monitoring and fault query for the satellite, and packet switching and interface protocol conversion for communication data. For example, a link between the terrestrial station and the satellite is referred to as a feeder link (feeder link), and a link between the satellite and the terminal device is referred to as a service link (service link).

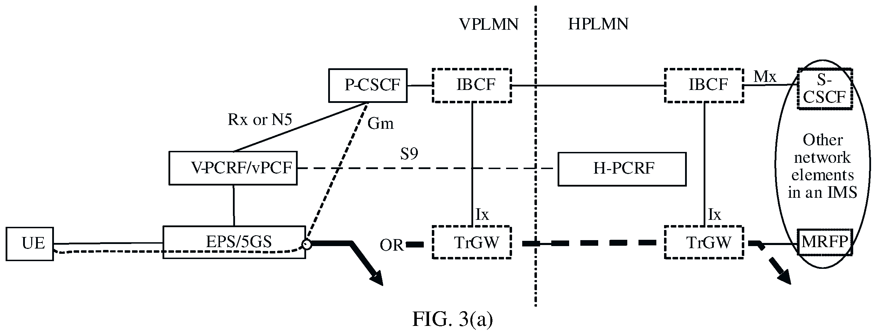

FIG. 3(a) to FIG. 3(c) are a diagram of another network architecture applicable to an embodiment of this application.

Before FIG. 3(a) to FIG. 3(c) are described, roaming (roaming) is first described. An operator A and an operator B are used as an example. Roaming refers to a case in which a mobile user belonging to the operator A accesses a network of the operator B. For the user, a network of the operator A may be considered as a home network (or referred to as a homing network), and the network of the operator B may be considered as a visited network.

A cellular mobile communication network of a specific standard of a specific operator may be referred to as a public land mobile network (public land mobile network, PLMN). A PLMN (namely, the home network) to which the user subscribes may be referred to as a home public land mobile network (public land mobile network, PLMN) (home PLMN, HPLMN), and a PLMN (namely, the visited network) to which the user roams may be referred to as a visited public land mobile network (visited PLMN, VPLMN).

For example, roaming scenarios may be classified into local breakout (local breakout, LBO) roaming and home routed (home routed, HR) roaming. A difference between the LBO roaming and the HR roaming mainly lies in whether a session (for example, a protocol data unit (protocol data unit, PDU) session) needs to be connected to a user plane function (user plane function, UPF) in the home network. For example, in the HR roaming scenario, the session is connected to the UPF in the home network; and in the LBO roaming scenario, the session is not connected to the UPF in the home network. For the HR roaming and the LBO roaming, refer to related descriptions in a protocol. This is not limited.

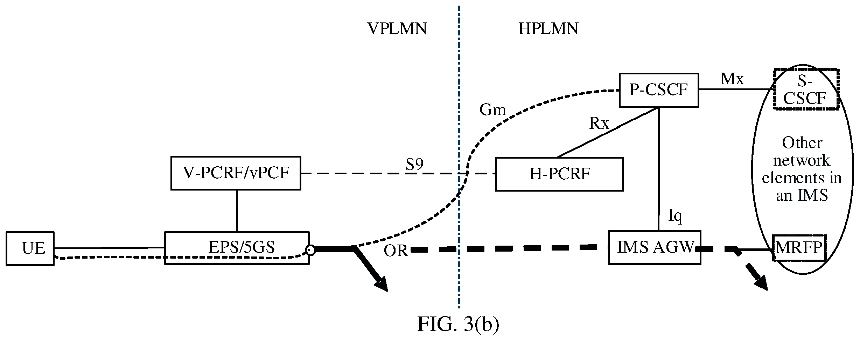

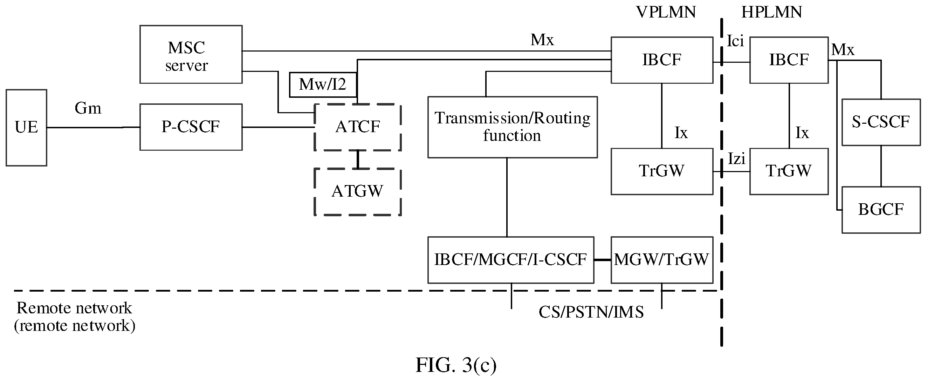

As shown in FIG. 3(a) to FIG. 3(c), LBO roaming in an IMS architecture is used as an example of the network architecture. The network architecture may include but is not limited to: a proxy-call session control function (proxy-call session control function, P-CSCF) network element, a service-call session control function (serving-call session control function, S-CSCF) network element, an interconnection border control function (interconnection border control function, IBCF) network element, a policy and charging rules function (policy and charging rules function, PCRF), a transition gateway (transition gateway, TrGW) network element, a multimedia resource function processor (media resource function processor, MRFP), and an IMS access gateway (IMS access gateway, IMS-AGW). The P-CSCF network element and the S-CSCF network element are mainly described below.
1. The P-CSCF network element is an ingress node (or may also be referred to as a 1^{st} access point) for a terminal device to access the IMS network, and is mainly responsible for forwarding session initialization protocol (session initialization protocol, SIP) signaling between the terminal device and the home network or the visited network. The P-CSCF network element behaves like a proxy, accepting requests and services them internally or forwards them on.
   The P-CSCF network element may be located in the visited network, as shown in FIG. 3(a) or FIG. 3(c), or the P-CSCF network element may be located in the home network, as shown in FIG. 3(b).
2. The S-CSCF network element is a central node of the IMS network, and mainly performs session control services for the terminal device. The S-CSCF network element may maintain a session state as needed by the network operator for support of the services.

The S-CSCF network element may be located in the home network, as shown in FIG. 3(a) to FIG. 3(c).

For the IMS architecture, the foregoing is merely an example for description, and constitute no limitation. An IMS architecture in another form is applicable to embodiments of this application. For details about the IMS architecture, refer to the IMS architecture in the protocol TS 23.228.

In addition, FIG. 3(a) to FIG. 3(c) are described by using a roaming scenario as an example. This is not limited herein. This embodiment of this application may also be applied to a non-roaming scenario. The non-roaming scenario is similar to FIG. 3(a) to FIG. 3(c), and a difference lies in that an evolved packet system (evolved packet system, EPS)/a 5GS is located in an HPLMN, and there is no visited PCRF (visited PCRF, V-PCRF) network element or visited PCF (visited PCF, V-PCF) network element.

FIG. 1 to FIG. 3(c) are merely diagrams, and a system architecture applicable to embodiments of this application is not limited thereto.

When a terminal device accesses a network via a satellite to perform a call service, call data needs to be routed to a terrestrial network. This not only causes an increase in a delay and affects user experience, but also causes a call failure when the terrestrial network is faulty.

In view of this, this application provides a solution. When terminal devices communicate with each other, a UE-satellite-UE (UE-satellite-UE, USU) mode is used. To be specific, transmission of media data (for example, voice data) may be directly performed between the terminal devices via a satellite, and the media data between the terminal devices may not transit through the ground. In this way, a delay of a satellite call is shortened, and user experience is improved.

First, a network architecture provided in embodiments of this application is described.

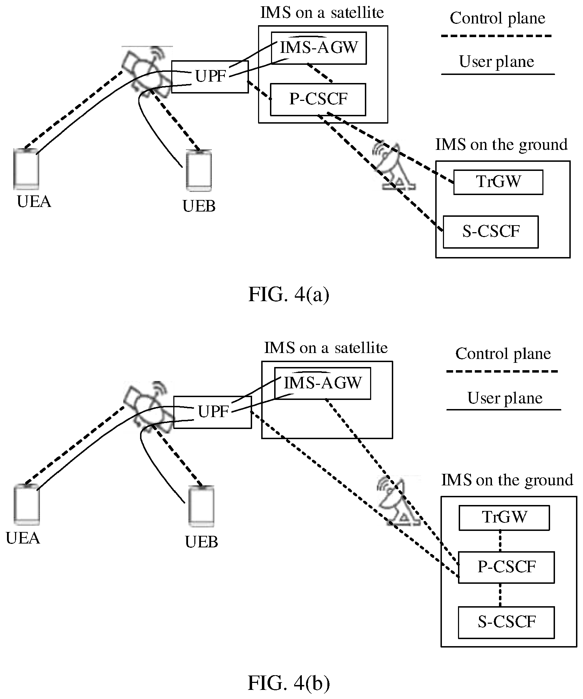

FIG. 4(a) to FIG. 4(d) are a diagram of a network architecture according to an embodiment of this application. As shown in FIG. 4(a) to FIG. 4(d), an IMS-AGW may be deployed on a satellite. In this way, when terminal devices (for example, a UE-A and a UE-B) using satellite access communicate with each other, transmission of call data may be implemented in a USU mode. Specifically, the UE-A and the UE-B may exchange call data via the IMS-AGW deployed on the satellite, and the call data may not transit through the ground. Deployment of a P-CSCF network element is not limited. The following lists several examples.

In an example, the P-CSCF network element may be deployed on the satellite, as shown in FIG. 4(a).

In another example, the P-CSCF network element may be deployed on the ground, as shown in FIG. 4(b).

In another example, a part of functions of the P-CSCF network element are deployed on the satellite, and a part of the functions are deployed on the ground.

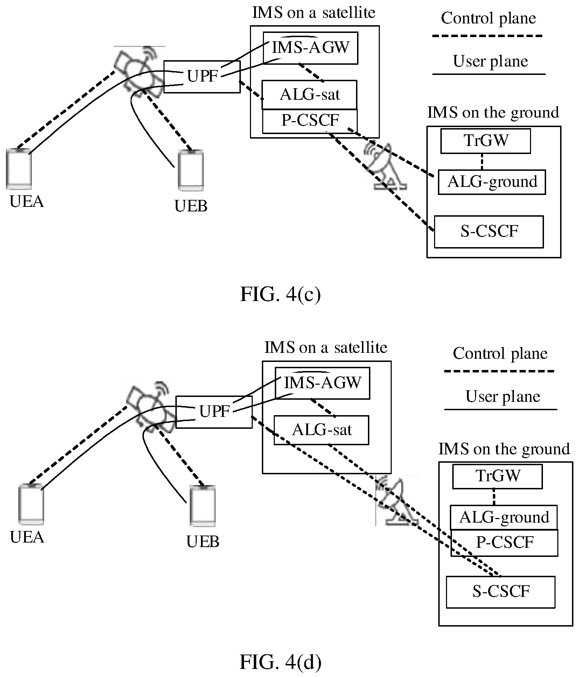

For example, as shown in FIG. 4(c), the P-CSCF network element is deployed on the satellite, and an application level gateway (application level gateway, ALG) in the P-CSCF network element is divided into a part on the satellite and a part on the ground. For example, an ALG deployed on the satellite is referred to as an ALG-sat, and an ALG deployed on the ground is referred to as an ALG-ground.

For another example, as shown in FIG. 4(d), the P-CSCF network element is deployed on the ground, and the ALG in the P-CSCF network element is divided into a part on the satellite and a part on the ground. For example, an ALG deployed on the satellite is referred to as an ALG-sat, and an ALG deployed on the ground is referred to as an ALG-ground.

In addition, optionally, a core network element is also deployed on the satellite, or it is considered that the satellite has a function of an access network element. For example, the core network element includes at least one of the following: a UPF network element, an SMF network element, a PCF network element, or the like. As shown in FIG. 4(a) to FIG. 4(d), the UPF network element is deployed on the satellite.

Optionally, an access network element is also deployed on the satellite, or it is considered that the satellite has a function of an access network element. For example, the access network element may be a RAN.

In addition, based on deployment scenarios of satellites and terrestrial networks, satellite network architectures may be classified into three types: transparent satellite architecture, satellite backhaul architecture, and regenerative satellite architecture. An architecture in which a UE is connected to a terrestrial access network via a satellite may be referred to as a transparent satellite architecture. An architecture in which a UE is connected to a terrestrial access network and then connected to a terrestrial network via a satellite may be referred to as a satellite backhaul architecture. In addition, an architecture in which an access network device is included in a satellite is referred to as a regenerative satellite architecture. The foregoing three architectures are all applicable to embodiments of this application.

The following starts to describe specific solutions of this application. Before the specific solutions of this application are described, the following descriptions are provided.
(1) In this application, the "indication" may include a direct indication, an indirect indication, an explicit indication, and an implicit indication. When a piece of indication information is described as indicating A, it may be understood as that the indication information carries A, directly indicates A, or indirectly indicates A.
   In this application, information indicated by the indication information is referred to as to-be-indicated information. In a specific implementation process, the to-be-indicated information is indicated in a plurality of manners, for example but not limited to: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.
(2) In this application, "sending" and "receiving" indicate signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of the chip interface. In other words, sending and receiving may be performed between devices, for example, between a network device and a terminal device; or may be performed inside a device, for example, sending or receiving between parts, modules, chips, software modules, or hardware modules inside the device through a bus, a cable, or an interface.
(3) In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
(4) In this application, "first" and "second" are merely for ease of description, and are used to distinguish objects, but are not intended to limit the scope of embodiments of this application, and are not used to describe an order or a sequence of features. It should be understood that objects described in such a way are interchangeable in an appropriate case, so that a solution other than embodiments of this application can be described.

The following describes in detail the method provided in embodiments of this application with reference to the accompanying drawings. Embodiments provided in this application may be applied to the architectures shown in FIG. 1 to FIG. 4(d). This is not limited.

A specific structure of an entity for performing a method provided in embodiments of this application is not particularly limited in the following embodiments, provided that a program that records code of the method provided in embodiments of this application can be run to perform communication according to the method provided in embodiments of this application. For example, the entity for performing the method provided in embodiments of this application may be a receiver device or a transmitter device, or a functional module that is in the receiver device or the transmitter device and that can invoke the program and execute the program. Without a loss of generality, the following uses interaction between network elements as an example to describe in detail the communication method provided in embodiments of this application.

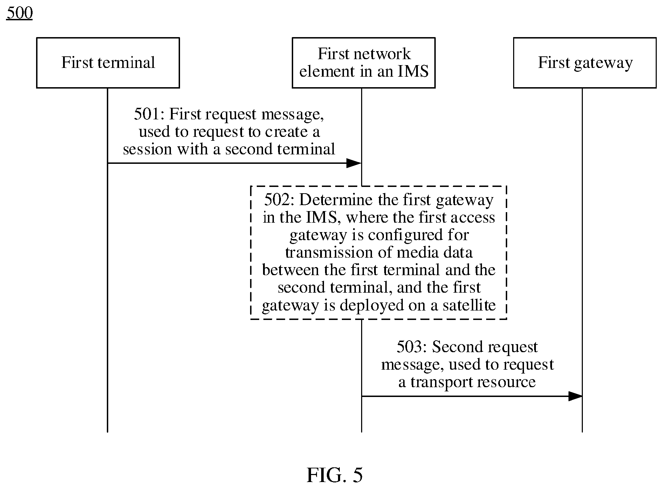

FIG. 5 is a diagram of a communication method 500 according to an embodiment of this application. The method 500 shown in FIG. 5 may include the following steps.

501: A first network element in an IMS receives a first request message from a first terminal. The first request message is used to request to create a session with a second terminal.

The first terminal uses satellite access. In embodiments of this application, it is mentioned a plurality of times that the terminal uses satellite access. This indicates that the terminal accesses a network via a satellite, or the terminal accesses a serving (serving) network (for example, a serving PLMN) via the satellite, or an access technology of the terminal is satellite access. The network accessed by the terminal via the satellite may be an NTN network.

For example, the IMS may alternatively be replaced with a second network. For example, in step 501, the first network element in the second network receives the first request message from the first terminal, or the first network element in the second network receives the first request message from the first terminal via a first network. The first network is configured to establish a connection between the second network (for example, the IMS) and the terminal, that is, the terminal can communicate with the second network. For example, the first network is an IP-CAN. For example, the first network is an EPS or a 5GS.

In this embodiment of this application, the IMS is used as an example for description. It may be understood that the IMS is merely an example, and a name of the IMS does not limit the protection scope of this application. This application does not exclude a possibility that another name is used in a future protocol to replace the IMS to implement a same or similar function of the IMS.

For example, the first network element is a session control network element (for example, a session control network element in the IMS). For example, the first network element is a P-CSCF network element, or a functional module (for example, an ALG) in the P-CSCF network element.

For example, the session control network element may be deployed on the ground, or the session control network element may be deployed on the satellite, or a part of functions of the session control network element are deployed on the satellite and/or the ground. For details, refer to the architecture shown in FIG. 4(a) to FIG. 4(d).

For example, the first request message may also be referred to as a session request message or a session initiation message. That the first request message is used to request to create the session with the second terminal may also be understood that the first request message is used to request to create a call between the first terminal and the second terminal. In other words, the first request message is used to request to create the call with the second terminal. For example, the first request message is a SIP request (SIP INVITE) message.

Optionally, the method 500 further includes step 502.

502: The first network element in the IMS determines a first gateway in the IMS for the first terminal. The first gateway is configured for transmission of media data between the first terminal and a second terminal, and the first gateway is deployed on the satellite.

That the first network element in the IMS determines the first gateway for the first terminal may also be understood as follows: The first network element in the IMS determines a transport resource for the first terminal, or the first network element in the IMS obtains (or determines, or requests) the transport resource of the first terminal. For example, the first network element in the IMS determines the transport resource for the first terminal. A manner in which the first network element in the IMS determines the transport resource for the first terminal may include: The first network element in the IMS determines the first gateway, and the first gateway determines the transport resource for the first terminal. The transport resource is used for transmission of media data of the first terminal, namely, the media data between the first terminal and the second terminal.

The first gateway, which may also be referred to as a satellite gateway, represents a gateway deployed on the satellite, namely, an on-satellite gateway. For example, the first gateway is an access gateway. For example, the first gateway is an AGW or an IMS-AGW.

The second terminal represents a terminal called by the first terminal. The second terminal may use satellite access.

503: The first network element in the IMS sends a second request message to the first gateway. The second request message is used to request a transport resource.

The transport resource is used for transmission of the media data (for example, call data) between the first terminal and the second terminal.

For example, the transport resource includes at least one of the following: an address (for example, a source address or a destination address), a port number (for example, a source port number or a destination port number), or the like.

According to the foregoing technical solution, after receiving the request message of the first terminal using the satellite access, the first network element in the IMS (for example, the session control network element in the IMS) may determine, for the first terminal, the gateway deployed on the satellite, and request the gateway to allocate the transport resource for the media data of the first terminal (or the media data between the first terminal and the second terminal). In this way, the gateway deployed on the satellite may directly perform transmission of the media data between the first terminal and the second terminal, that is, the media data between the first terminal and the second terminal may not transit through the ground. In this way, a delay of a satellite call is shortened, and user experience is improved.

For ease of understanding, the following describes related solutions in embodiments of this application by using an example in which the first network element is the P-CSCF network element.

The first terminal and the second terminal may be served by a same session control network element, or may be served by different session control network elements. For example, if the first terminal and the second terminal may register with or be connected to a same session control network element, the session control network element of the first terminal and the session control network element of the second terminal are a same session control network element. For another example, if the first terminal and the second terminal register with different session control network elements, the session control network element of the first terminal and the session control network element of the second terminal are different session control network elements. If the session control network element of the first terminal and the session control network element of the second terminal are the same session control network element, the session control network element (namely, the session control network element in step 501) may know whether the first terminal and the second terminal use satellite access. If the session control network element of the first terminal and the session control network element of the second terminal are different session control network elements, the session control network element of the first terminal (namely, the session control network element in step 501) may not know whether the second terminal use satellite access, or the session control of the first terminal may learn, from the session control network element of the second terminal, whether the second terminal uses satellite access.

In an example, the first terminal and the second terminal are served by a same satellite. For example, serving PLMNs of the first terminal and the second terminal are the same. The serving PLMN of the terminal may be understood as a network currently accessed by the terminal. If serving PLMNs of two terminals are the same, it may be understood that the two terminals currently access the same network.

In a possible case, neither the first terminal nor the second terminal roams. In this case, both the serving PLMNs of the first terminal and the second terminal are HPLMNs, and the two HPLMNs are a same PLMN.

In another possible case, the first terminal or the second terminal roams. In this case, for a roaming terminal, a serving PLMN of the roaming terminal is a VPLMN of the roaming terminal. For a non-roaming terminal, a serving PLMN of the non-roaming terminal is an HPLMN of the non-roaming terminal, and the VPLMN of the roaming terminal is the same as the HPLMN of the non-roaming terminal.

In another possible case, both the first terminal and the second terminal roam. In this case, VPLMNs of the first terminal and the second terminal are the same. In addition, in this case, HPLMNs of the first terminal and the second terminal may be the same or may be different. This is not limited herein.

In another example, there is a link (for example, an inter-satellite link) between the first terminal and the second terminal. For example, the first terminal and the second terminal are served by different satellites, and the satellite serving the first terminal and the satellite serving the second terminal belong to a same constellation. For another example, the first terminal and the second terminal are served by different satellites, and there is a link (for example, an inter-satellite link) between the satellite serving the first terminal and the satellite serving the second terminal.

For example, the media data between the first terminal and the second terminal includes the call data between the first terminal and the second terminal.

That the session control network element determines the first gateway for the first terminal may also be understood as follows: The session control network element determines the first gateway in response to the first request message of the first terminal, or the session control network element allocates the first gateway in response to the first request message of the first terminal.

Optionally, the media data between the first terminal and the second terminal does not transit through the ground. In a possible implementation, the media data between the first terminal and the second terminal does not transit through a second gateway in the IMS, and the second gateway is deployed on the ground. The second gateway, which may also be referred to as a ground gateway, represents a gateway deployed on the ground, namely, an on-ground gateway. For example, the second gateway is an access gateway, for example, an AGW (for example, an IMS-AGW) and/or a TrGW.

Based on this, media data between terminals may be directly exchanged via a satellite, and does not need to transit through the ground. This greatly shortens a delay of a satellite call, and a call between the terminals is not affected when a terrestrial network is faulty.

"The media data does not transit through the ground" described in the following embodiments may alternatively be replaced with "the media data does not transit through the gateway deployed on the ground".

The session control network element may directly determine the first gateway. To be specific, after receiving the request message from the first terminal, the session control network element directly determines the gateway deployed on the satellite. Alternatively, the session control network element may determine the first gateway when a specific condition is met. To be specific, after receiving the request message from the first terminal, the session control network element determines, when determining that the specific condition is met, the gateway deployed on the satellite. In addition, for example, that the session control network element determines the first gateway may be replaced with that the session control network element determines that the first terminal and the second terminal perform USU communication (or can perform USU communication), or may be replaced with that the session control network element sends the second request message to the first gateway. The USU communication indicates that transmission of media data (for example, call data) between terminal devices may be directly performed via a satellite, that is, the media data between the terminal devices may not transit through the ground. The following lists several possible implementations by using an example in which the session control network element determines the first gateway.

In a first possible implementation, when the first terminal uses satellite access, the session control network element determines the first gateway. Based on this implementation, the session control network element determines the first gateway for the first terminal when determining that the first terminal uses satellite access. Specifically, when the first terminal uses ground access, a gateway deployed on the satellite may not be used. Therefore, the gateway deployed on the satellite may be determined when it is determined that the first terminal uses satellite access, to avoid a waste of resources.

In an example, the session control network element may determine whether the first terminal uses satellite access. For example, the SIP INVITE message in step 501 includes private (private, P)-access (access)-network (network)-information (info), and the session control network element determines, based on the P-access-network-info, whether the first terminal uses satellite access. For example, an access type (access type) in the P-access-network-info includes satellite. Therefore, the session control network element determines that the first terminal uses satellite access.

In another example, the session control network element may learn, from another network element, whether the first terminal uses satellite access. For example, the session control network element learns, from a UDM, whether the first terminal uses satellite access.

In a second possible implementation, the session control network element determines the first gateway based on subscription information of the first terminal. The subscription information of the first terminal indicates that the media data of the first terminal is allowed not transit through the ground, or the subscription information of the first terminal indicates that the first terminal has USU authorization.

For example, the subscription information of the first terminal indicates USU authorization information of the first terminal. For example, the USU authorization information of the first terminal includes at least one of the following: whether the first terminal has the USU authorization, the first terminal using the satellite access, USU being available when the satellite accesses a specific PLMN, or information about a session control network element with which the first terminal registers. That the first terminal has the USU authorization may alternatively be replaced with that the media data of the first terminal may not transit through the ground.

Whether the first terminal has the USU authorization indicates whether the first terminal supports the USU communication (or a USU call), that is, whether transmission of the media data (for example, the call data) of the first terminal is allowed to (or referred to as may) be performed directly via the satellite, that is, whether the media data of the first terminal is allowed not to transit through the ground. The USU communication indicates that communication is performed directly via the satellite, that is, the communication does not need to transit through the ground.

Based on this, when the first terminal has the USU authorization, the session control network element determines, for the first terminal, the gateway deployed on the satellite, to avoid a waste of resources.

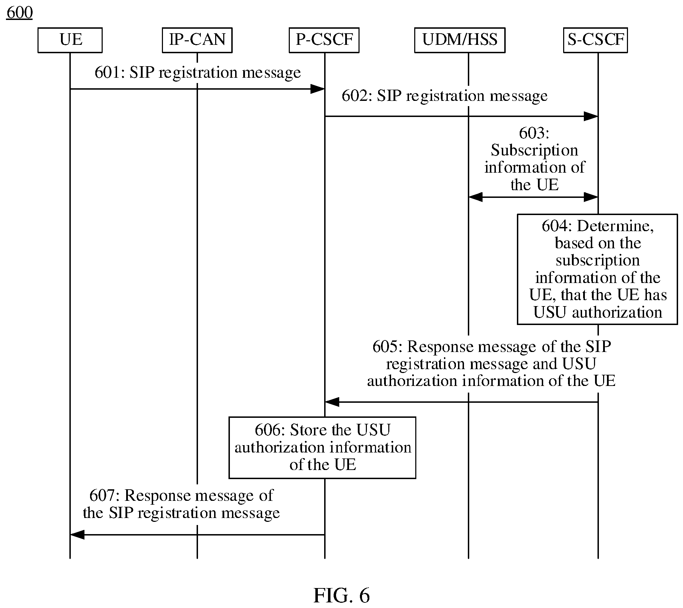

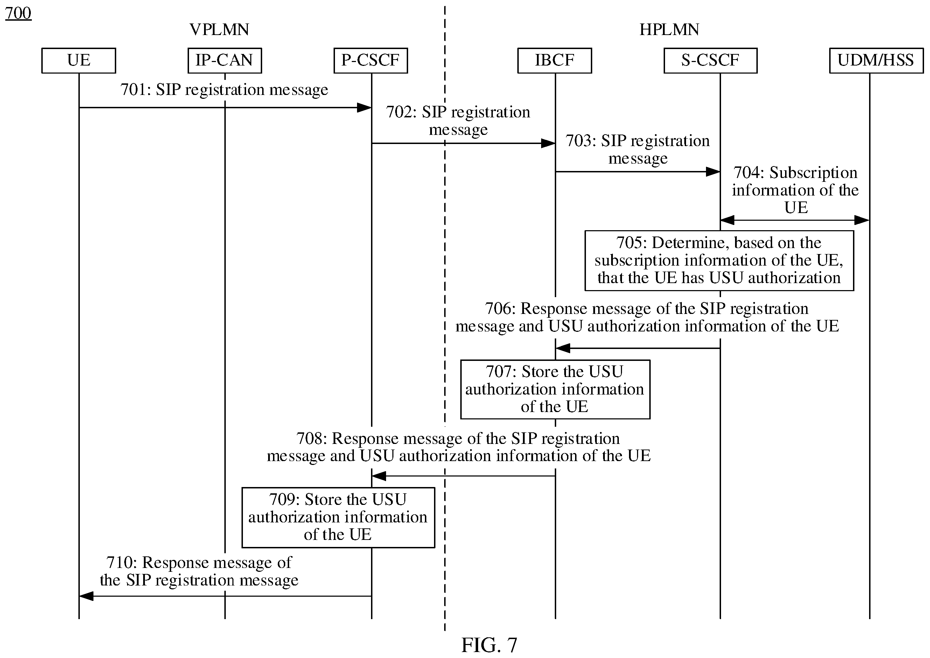

The session control network element may locally store the subscription information of the first terminal, or may read the subscription information of the first terminal from another network element. This is not limited herein. With reference to FIG. 6 and FIG. 7, the following provides implementations in which the session control network element obtains the subscription information of the first terminal.

In a third possible implementation, when the media data of the first terminal is allowed not to transit through the ground, the session control network element determines the first gateway.

In a fourth possible implementation, when the second terminal uses satellite access, or when both the first terminal and the second terminal use satellite access, the session control network element determines the first gateway.

If the session control network element of the first terminal and the session control network element of the second terminal are a same session control network element, the session control network element may determine whether the first terminal and the second terminal use satellite access. For a manner in which the session control network element determines whether the first terminal and the second terminal use satellite access, refer to the descriptions in the first possible implementation. Details are not described herein again.

If the session control network element of the first terminal and the session control network element of the second terminal are different session control network elements, for example, the session control network element of the first terminal may learn, from the session control network element of the second terminal, whether the second terminal uses satellite access.

In a fifth possible implementation, the session control network element determines the first gateway based on subscription information of the second terminal, or the session control network element determines the first gateway based on the subscription information of the first terminal and the subscription information of the second terminal. The subscription information of the first terminal indicates that the media data of the first terminal is allowed not to transit through the ground, and the subscription information of the second terminal indicates that media data of the second terminal is allowed not to transit through the ground. For example, the first terminal and the second terminal register with a same session control network element. In this case, the session control network element can obtain the subscription information of both the first terminal and the second terminal. For another example, the first terminal and the second terminal register with different session control network elements. For example, the session control network element of the first terminal may obtain the subscription information of the second terminal from the session control network element of the second terminal. For this implementation, refer to the second possible implementation. Details are not described herein again.

In a sixth possible implementation, when the first terminal and the second terminal are served by a same satellite, the session control network element determines the first gateway.

In a seventh possible implementation, when there is a link (for example, an inter-satellite link) between the first terminal and the second terminal, the session control network element determines the first gateway.

The foregoing several possible implementations are examples for description, and constitute no limitation. Any variation of the foregoing several implementations is applicable to embodiments of this application. In addition, the foregoing several possible implementations may be used independently, or may be used in combination. For example, the sixth possible implementation or the seventh possible implementation may be used in combination with at least one of the first possible implementation to the fifth possible implementation.

Optionally, when the first terminal performs an IMS registration procedure, the session control network element obtains subscription information of a terminal (for example, the first terminal or the second terminal). In a possible implementation, the session control network element receives a registration request message from the first terminal. The registration request message is used to request to register with the IMS. The session control network element sends the registration request message to the second network element in the IMS. The session control network element receives a registration response message from the second network element in the IMS. The registration response message includes the subscription information of the first terminal. For example, the second network element in the IMS is an S-CSCF network element, or is a functional module (for example, an ALG) in the S-CSCF network element.

The following uses an example in which the session control network element is the P-CSCF network element. With reference to FIG. 6 and FIG. 7, the following provides a schematic procedure in which the P-CSCF obtains the subscription information.

FIG. 6 is a diagram of performing IMS registration by a UE according to an embodiment of this application. For example, the method 600 may be used in a non-roaming scenario. The method 600 shown in FIG. 6 may include the following steps.

601: The UE sends a SIP registration message to a P-CSCF network element.

For example, the UE sends the SIP registration message to the P-CSCF network element by using a created IMS PDU session and quality of service (quality of service, QoS) flow (QoS flow), to perform SIP registration.

For example, the UE may be a calling UE (namely, a first terminal), or may be a called UE (namely, a second terminal). That is, both the calling UE and the called UE may perform SIP registration by using the method 600.

602: The P-CSCF network element sends the SIP registration message to an S-CSCF network element.

That is, the P-CSCF network element may forward the SIP registration message of the UE to the S-CSCF network element.

603: The S-CSCF network element obtains subscription information of the UE from a UDM network element or a home subscriber server (home subscriber server, HSS).

604: The S-CSCF network element determines, based on the subscription information of the UE, that the UE has USU authorization.

The subscription information of the UE indicates USU authorization information of the UE. For example, the USU authorization information of the UE includes at least one of the following: whether the UE has the USU authorization, the UE using satellite access, USU being available when a satellite accesses a specific PLMN, or information about the P-CSCF network element with which the UE registers.

Whether the UE has the USU authorization indicates whether the UE supports USU communication (or a USU call), that is, whether transmission of media data (for example, call data) of the UE is allowed to (or referred to as may) be performed directly via the satellite, that is, whether the media data of the UE is allowed not to transit through the ground.

Whether the UE has the USU authorization may be implemented by using one or more bits. For example, it is assumed that 1 bit indicates whether the UE has the USU authorization. If the bit is set to "0", it indicates that the UE has the USU authorization; or if the bit is set to "1", it indicates that the UE does not have the USU authorization. It should be understood that the foregoing is merely an example for description, and constitutes no limitation.

In this embodiment of this application, for example, it is assumed that the authorization information of the UE indicates that the UE has the USU authorization.

605: The S-CSCF network element sends a response message of the SIP registration message and the USU authorization information of the UE to the P-CSCF network element.

For example, assuming that the registration of the UE is successful, the S-CSCF network element sends a SIP registration success message (for example, 200 ok) to the P-CSCF network element.

Further, optionally, the S-CSCF network element sends the USU authorization information of the UE to the P-CSCF network element. For example, if the UE has the USU authorization, the S-CSCF network element may send the USU authorization information of the UE to the P-CSCF network element. The USU authorization information of the UE includes at least one of the following: the UE having the USU authorization (that is, the UE may support the USU communication), the UE using the satellite access, USU being available when the satellite accesses the specific PLMN, or the information about the P-CSCF network element with which the UE registers.

Transmission of the USU authorization information of the UE and the response message of the SIP registration message may be performed through same signaling or different signaling. This is not limited herein. For example, the response message of the SIP registration includes the USU authorization information of the UE.

It may be understood that, in step 605, an example in which the S-CSCF network element sends the USU authorization information of the UE to the P-CSCF network element is used for description. This is not limited herein. For example, in step 605, the S-CSCF network element sends subscription information of the UE to the P-CSCF network element. The subscription information of the UE indicates the USU authorization information of the UE.

606: The P-CSCF network element stores the USU authorization information of the UE.

607: The P-CSCF network element sends the response message of the SIP registration message to the UE.

It can be learned from the foregoing that the P-CSCF network element may obtain the USU authorization information of the UE in the IMS registration procedure performed by the UE. In this way, the USU authorization information can be directly read subsequently as needed.

For a specific procedure of performing IMS registration by the UE, refer to related descriptions in 3GPP TS 23.228. This is not limited herein.

FIG. 7 is another diagram of performing IMS registration by a UE according to an embodiment of this application. For example, the method 700 may be used in a roaming scenario. The method 700 shown in FIG. 7 may include the following steps.

701: The UE sends a SIP registration message to a P-CSCF network element in a VPLMN.

702: The P-CSCF network element in the VPLMN forwards the SIP registration message to an IBCF network element in an HPLMN.

703: The IBCF network element in the HPLMN forwards the SIP registration message to an S-CSCF network element in the HPLMN.

704: The S-CSCF network element in the HPLMN obtains subscription information of the UE from a UDM network element or an HSS in the HPLMN.

705: The S-CSCF network element in the HPLMN determines, based on the subscription information of the UE, that the UE has USU authorization.

706: The S-CSCF network element in the HPLMN sends a response message of the SIP registration message and USU authorization information of the UE to the IBCF network element in the HPLMN.

707: The IBCF network element in the HPLMN stores the USU authorization information of the UE.

708: The IBCF network element in the HPLMN sends the response message of the SIP registration message and the USU authorization information of the UE to the P-CSCF network element in the VPLMN.

709: The P-CSCF network element in the VPLMN stores the USU authorization information of the UE.

710: The P-CSCF network element in the VPLMN sends the response message of the SIP registration message to the UE.

The method 700 is similar to the method 600, and a difference lies in that in the method 700, the IBCF network element in the HPLMN may also store the USU authorization information of the UE. In addition, due to the roaming scenario, for example, a network element in the VPLMN may interact with a network element in the HPLMN via the IBCF network element in the HPLMN.

Optionally, a session control network element further determines a second gateway. The second gateway is deployed on the ground. Specifically, after receiving a first request message from a first terminal, the session control network element may further determine, for the first terminal, the gateway deployed on the ground. If the first terminal and a second terminal cannot perform USU communication, the first terminal may communicate with the second terminal directly via an access network element on the ground, to reduce a delay. In a possible implementation, a first network element in an IMS sends a third request message to a second gateway in the IMS. The third request message is used to request a transport resource, the transport resource is used for transmission of media data between the first terminal and the second terminal, and the second gateway is deployed on the ground.

Further, optionally, if it is determined that the media data between the first terminal and the second terminal is allowed not to transit through the ground, the session control network element releases (or deallocates (deallocates)) the second gateway. Alternatively, the session control network element releases the second gateway if transmission of the media data between the first terminal and the second terminal can be performed (or is implemented) via the satellite (for example, a first gateway deployed on the satellite, or the first gateway deployed on the satellite and another network element deployed on the satellite). Releasing the second gateway may also be understood as: releasing the transport resource allocated by the second gateway to the media data between the first terminal and the second terminal.

Optionally, if the first terminal is a roaming terminal, the session control network element or a border control network element (for example, an IBCF network element) in a visited network may determine the second gateway. Specifically, the session control network element is deployed in the visited network, and the session control network element sends the first request message to the border control network element in the visited network, to request the border network element to determine the second gateway for the first terminal. Correspondingly, if it is determined that the media data between the first terminal and the second terminal is allowed not to transit through the ground, the session control network element or the border control network element may remove the second gateway. Alternatively, the session control network element or the border control network element may remove the second gateway if transmission of the media data between the first terminal and the second terminal can be performed (or is implemented) via the satellite (for example, the first gateway deployed on the satellite, or the first gateway deployed on the satellite and the another network element deployed on the satellite).

Optionally, if the first terminal is the roaming terminal, a session control network element located in the visited network may further send indication information to a network element in a home network, to indicate whether to perform visited network routing. It may be understood that the session control network element in the visited network may further send the indication information to the network element in the home network. This may be as follows: The visited network sends the indication information to the network element in the home network via another network element.

That the indication information indicates whether to perform visited routing may be replaced with: The indication information indicates whether to perform visited network routing on the media data between the first terminal and the second terminal.

Performing visited network routing indicates that media data of the first terminal may be directly forwarded by the network element in the visited network (for example, the first gateway in the visited network) without transiting through the home network.

In a possible implementation, whether to perform visited network routing may be indicated by using one or more bits. For example, it is assumed that 1 bit indicates whether to perform visited network routing. If the bit is set to "0", it indicates that visited network routing is performed; or if the bit is set to "1", it indicates that visited network routing is not performed. It should be understood that the foregoing is merely an example for description, and constitutes no limitation.

In another possible implementation, whether to perform visited network routing may be indicated by sending or not sending a specific field. For example, it is assumed that a field #1 is sent or not sent to indicate whether to perform visited network routing. If the session control network element in the visited network sends the field #1 to the network element in the home network, it indicates that visited network routing is performed; or if the session control network element in the visited network does not send the field #1 to the network element in the home network, it indicates that visited network routing is not performed. It should be understood that the foregoing is merely an example for description, and constitutes no limitation.

A related solution about whether to perform visited network routing is described in detail below with reference to the method X300.

Optionally, if the first terminal is the roaming terminal, the session control network element in the visited network may further receive indication information sent by the network element in the home network, to indicate whether to perform loopback (loopback).

Performing loopback indicates that the media data of the first terminal may be directly forwarded by the network element in the visited network (for example, the first gateway in the visited network) without transiting through the home network.

In a possible implementation, whether to perform loopback may be indicated by using one or more bits. For example, it is assumed that 1 bit indicates whether to perform loopback. If the bit is set to "0", it indicates that loopback is performed; or if the bit is set to "1", it indicates that loopback is not performed. It should be understood that the foregoing is merely an example for description, and constitutes no limitation.

In another possible implementation, whether to perform loopback may be indicated by sending or not sending a specific field. For example, it is assumed that a field #2 is sent or not sent to indicate whether to perform loopback. If the network element in the home network element sends the field #2 to the session control network element in the visited network, it indicates that loopback is performed; or if the network element in the home network element does not send the field #2 to the session control network element in the visited network, it indicates that loopback is not performed. It should be understood that the foregoing is merely an example for description, and constitutes no limitation.

A related solution about whether to perform loopback is described in detail below with reference to the method X400.

The foregoing is described from a perspective of a session call with reference to the method 500. The following uses configuration of USU communication as a core for description with reference to the method 800. The method 800 and the method 500 may be used in combination, or may be used separately. For content that is not described in detail in the method 800, refer to the descriptions in the method 500.

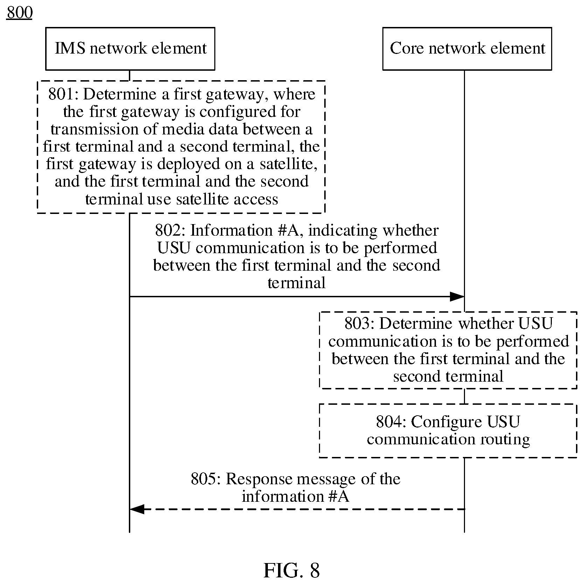

FIG. 8 is a diagram of a communication method 800 according to an embodiment of this application. The method 800 shown in FIG. 8 may include the following steps.

The method 800 includes step 802. Optionally, the method 800 includes step 801.

801: An IMS network element determines a first gateway. The first gateway is configured for transmission of media data between a first terminal and a second terminal, the first gateway is deployed on a satellite, and the first terminal and the second terminal use satellite access.

The IMS network element may be a network element located in an IMS. For example, the IMS network element may include at least one of the following: a session control network element, a gateway (for example, an IMS-AGW), or another network element in the IMS. For example, the IMS network element is a P-CSCF network element or an S-CSCF network element.

Step 801 is similar to step 502. For example, the IMS network element may determine the first gateway based on the first possible implementation to the seventh possible implementation mentioned in the method 500. For another example, the IMS network element may further determine a second gateway for the first terminal. For brevity, details are not described herein again.

Optionally, before step 801, the method 800 further includes: The IMS network element receives a session call message from the first terminal. This step is similar to step 501, and details are not described herein again.

Optionally, before step 801, the method 800 further includes: The IMS network element determines whether USU communication is to be performed between the first terminal and the second terminal. Alternatively, the IMS network element determines whether USU communication can be performed between the first terminal and the second terminal, or the IMS network element determines whether USU communication may be performed between the first terminal and the second terminal. For a specific determining manner, for example, refer to the first possible implementation to the seventh possible implementation mentioned in the method 500. Details are not described herein again.

802: An IMS network element sends information #A to a core network element. The information #A indicates whether USU communication is to be performed between the first terminal and the second terminal.

For example, if the IMS network element determines that USU communication may be performed between the first terminal and the second terminal, the IMS network element sends the information #A to the core network element. The information #A indicates that USU communication is to be performed between the first terminal and the second terminal.

For another example, if the IMS network element determines that USU communication cannot be performed between the first terminal and the second terminal, the IMS network element sends the information #A to the core network element. The information #A indicates that USU communication cannot be performed between the first terminal and the second terminal. Alternatively, the IMS network element does not send the information #A to the core network element.

For example, the core network element includes at least one of the following: an SMF, a PCF, a UPF, or another core network element.

For example, the IMS network elements in step 801 and step 802 may be the same, or may be different. For example, the IMS network elements in step 801 and step 802 are both session control network elements (for example, P-CSCF network elements); or the IMS network element in step 801 is a P-CSCF network element, and the IMS network element in step 802 is an S-CSCF network element.

That the information #A indicates whether USU communication is to be performed between the first terminal and the second terminal may be replaced with: The information #A indicates whether the first terminal and the second terminal are to exchange media data on the satellite, or the information #A indicates whether the media data between the first terminal and the second terminal is to be exchanged on the satellite, or the information #A indicates whether the media data between the first terminal and the second terminal is to transit through the ground. In addition, the information #A may directly or indirectly indicate whether USU communication is to be performed between the first terminal and the second terminal. For example, the information #A may be used to assist the core network element in determining whether USU communication is to be performed between the first terminal and the second terminal. Therefore, the information #A may implement a function of indicating whether USU communication is to be performed between the first terminal and the second terminal.

For example, the information #A may be implemented by using one or more bits. For example, it is assumed that 1 bit indicates whether USU communication is to be performed between the first terminal and the second terminal. If the bit is set to "0", it indicates that USU communication is to be performed between the first terminal and the second terminal; or if the bit is set to "1", it indicates that USU communication is not to be performed between the first terminal and the second terminal. It should be understood that the foregoing is merely an example for description, and constitutes no limitation.

For example, the information #A may be used to assist the core network element in determining whether USU communication is to be performed between the first terminal and the second terminal.

Optionally, the information #A includes at least one of the following information: USU authorization information of the terminal (for example, the first terminal and/or the second terminal), an identifier of the terminal (for example, the first terminal and/or the second terminal), an address of the terminal (for example, the first terminal and/or the second terminal), an access mode of the terminal (for example, the first terminal and/or the second terminal), a satellite serving the terminal (for example, the first terminal and/or the second terminal), or description information. For the USU authorization information of the terminal, refer to the descriptions in the method 500. The following briefly describes other information.
(1) The identifier of the terminal may indicate (or identify) the terminal in a communication system, for example, uniquely indicate the terminal in the communication system.
   For example, the identifier of the terminal includes at least one of the following: a uniform resource locator (uniform resource locator, URL) (for example, a SIP URL) of the terminal; a uniform resource identifier (uniform resource identifier, URI) (for example, a telephone (telephone, TEL) URI) of the terminal; an IP multimedia private identity (IP multimedia private identity, IMPI) of the terminal, or some bits including the IMPI; an IP multimedia public identity (IP multimedia public identity, IMPU) of the terminal, or some bits including the IMPU; an international mobile subscriber identity (international mobile subscriber identity, IMSI) of the terminal, or some bits including the IMSI; a subscription permanent identifier (subscription permanent identifier, SUPI) of the terminal, or some bits including the SUPI; or a subscription concealed identifier (subscription concealed identifier, SUCI) of the terminal, or some bits including the SUCI.
(2) The access mode of the terminal indicates whether the terminal accesses a network via the ground or the satellite.
(3) The satellite serving the terminal indicates related information of the satellite serving the terminal, for example, includes at least one of the following: a satellite identifier, a constellation in which the satellite is located, and whether there is an inter-satellite link between the constellation in which the satellite is located and another constellation.
(4) The description information is description information of the media data (for example, call data) between the first terminal and the second terminal. The description information may indicate media data that needs to be exchanged (that is, USU communication) on a satellite.
   For example, the description information includes a service data flow (service data flow, SDF) template (template). The SDF template may include an IP triplet (a source/destination address, a source port number, and a protocol type) or an IP quintuple (the destination address, a destination port number, the source address, the source port number, and the protocol type). For example, the media data is call data. For call data of the first terminal, description information of the call data may include {source address=calling address/destination address=called address, source port number=calling port number/destination port number=called port number, and protocol type=UDP} or an IP quintuple {destination address=called address, destination port number=called port number, source address=calling address, source port number=calling port number, and protocol type=UDP}. For call data of the second terminal, description information of the call data may include {source address=called address/destination address=calling address, source port number=called port number/destination port number=calling port number, and protocol type=UDP} or an IP quintuple {destination address=calling address, destination port number=calling port number, source address=called address, source port number=called port number, and protocol type=UDP}.
(5) The address of the terminal may include address information of the terminal in the IP triplet or the IP quintuple. The IMS network element may obtain the address information of the terminal from a message (for example, the session call message or a registration message) sent by the terminal to the IMS network element, for example, from a SIP message sent by the terminal to the IMS network element (for example, from a message body like a SIP registration message or a SIP INVITE message). In addition, the SIP message of the terminal may be sent to the IMS network element in a form of a data packet (for example, an IP data packet). In this case, the IMS network element may alternatively obtain the address information of the terminal from source address information carried in a header (a header carrying the IP data packet of the SIP message, or the header of the data packet may alternatively be understood as a message header of the SIP message because the SIP message is implemented in the form of the data packet) of the data packet. Based on the two manners in which the IMS obtains the address information of the terminal, the address information of the terminal indicates, for example, an address of the terminal in a private network, for example, an IP address allocated by the SMF or the UPF to the terminal in a process of creating an IMS PDU session for the terminal, and the terminal may include the private network address in the SIP message sent to the IMS network element. Alternatively, the address information of the terminal may indicate an address of the terminal in a public network. For example, a UPF serving the terminal may allocate the address in the public network to the terminal. For example, when the terminal sends the SIP message to the IMS network element, when a data packet carrying the SIP message transits through the UPF, the UPF performs network address translation (network address translation, NAT) on an IP address (which is a private network address of the terminal in this case) in a header of the data packet, and obtains the address in the public network after translation. Alternatively, the address information of the terminal may indicate an address determined based on the private network address and the public network address of the terminal, for example, a combination of the private network address and the public network address of the terminal. Correspondingly, address information of the terminal in first information may include an IP address in a message body of the SIP message received by the IMS network element from the terminal, and/or include a source address in the packet header of the data packet that carries the SIP message of the terminal and is received by the IMS network element.

Further, optionally, if the IMS network element determines that the first terminal and the second terminal are served by a same PCF network element, the IMS network element sends the information #A to the core network element; or if the first terminal and the second terminal are served by a same PCF network element and a same SMF network element, the IMS network element sends information # to the core network element. Based on this, when determining that the first terminal and the second terminal are served by the same PCF network element (or the same PCF network element and the same SMF network element), the IMS network element sends the information #A to the core network element. In this way, a possibility that the core network element successfully configures USU communication can be improved. Specifically, if IMS PDU sessions of the first terminal and the second terminal are served by different PCF network elements or different SMF network elements, it is very difficult for the core network element to configure USU communication. In this case, USU communication may be implemented in another manner (for example, an OMR mechanism). The IMS network element may determine whether the first terminal and the second terminal are served by the same PCF network element (or the same PCF network element and the same SMF network element); or may request another network element to query, for example, request a PCF network element of the first terminal to query whether a PCF network element of the second terminal is the same as the PCF network element of the first terminal. Further, whether the PCF network elements or the SMF network elements are the same may be determined by the core network element. Details are described below.

Further, optionally, if the IMS network element determines that USU communication may be performed between the first terminal and the second terminal (for example, in the first possible implementation to the seventh possible implementation mentioned in the method 500), the IMS network element sends the information #A to the core network element. For example, if the IMS network element determines that there is an inter-satellite link between the first terminal and the second terminal, or the IMS network element determines that the first terminal and the second terminal are served by a same satellite, or the IMS network element determines that the first terminal and the second terminal have USU authorization, the IMS network element sends the information #A to the core network element.

Optionally, the method 800 further includes step 803.

803: The core network element determines whether USU communication is to be performed between the first terminal and the second terminal.

The following describes several possible manners in which the core network element determines whether USU communication is to be performed between the first terminal and the second terminal.

In a possible implementation, the core network element determines, based on whether the first terminal and the second terminal are served by a same PCF network element, whether USU communication is to be performed between the first terminal and the second terminal.

For example, if the first terminal and the second terminal are served by the same PCF network element, the core network element determines that USU communication is to be performed between the first terminal and the second terminal. If the first terminal and the second terminal are served by different PCF network elements, the core network element may determine that USU communication is not performed between the first terminal and the second terminal. Alternatively, the core network element may determine, based on another implementation, whether USU communication is to be performed between the first terminal and the second terminal.

In another possible implementation, the core network element determines, based on whether the first terminal and the second terminal are served by a same PCF network element and a same SMF network element, whether USU communication is to be performed between the first terminal and the second terminal.

For example, if the first terminal and the second terminal are served by the same PCF network element and the same SMF network element, the core network element determines that USU communication is to be performed between the first terminal and the second terminal. If the first terminal and the second terminal are served by different PCF network elements and/or different SMF network elements, the core network element may determine that USU communication is not performed between the first terminal and the second terminal. Alternatively, the core network element may determine, based on another implementation, whether USU communication is to be performed between the first terminal and the second terminal.

In another possible implementation, the core network element determines, based on whether the first terminal and the second terminal are served by a same UPF network element, whether USU communication is to be performed between the first terminal and the second terminal.

For example, if the first terminal and the second terminal are served by the same UPF network element, the core network element determines that USU communication is to be performed between the first terminal and the second terminal. If the first terminal and the second terminal are served by different UPF network elements, the core network element may determine that USU communication is not performed between the first terminal and the second terminal. Alternatively, the core network element may determine, based on another implementation, whether USU communication is to be performed between the first terminal and the second terminal. For example, if there is a constellation link between the first terminal and the second terminal, the core network element may determine that USU communication is to be performed between the first terminal and the second terminal.

In another possible implementation, the core network element determines, based on whether there is a constellation link between the first terminal and the second terminal, whether USU communication is to be performed between the first terminal and the second terminal.

For example, if there is the constellation link between the first terminal and the second terminal, the core network element determines that USU communication is to be performed between the first terminal and the second terminal. If there is no constellation link between the first terminal and the second terminal, the core network element may determine that USU communication is not performed between the first terminal and the second terminal. Alternatively, the core network element may determine, based on another implementation, whether USU communication is to be performed between the first terminal and the second terminal.

In another possible implementation, the information #A indicates whether USU communication is to be performed between the first terminal and the second terminal, and the core network element may directly learn, based on the information #A, whether USU communication is to be performed between the first terminal and the second terminal.

In another possible implementation, the core network element may determine, based on the USU authorization information of the terminal (for example, the first terminal and/or the second terminal), whether the terminal performs USU communication. For example, the information #A includes the USU authorization information of the terminal (for example, the first terminal and/or the second terminal).

For example, the information #A includes USU authorization information of the first terminal. In this case, if the USU authorization information of the first terminal indicates that the first terminal has USU authorization, the core network element determines that the first terminal and the second terminal may perform USU communication. In this case, the core network element may consider by default that the second terminal has the USU authorization, or the core network element may learn, in another manner, that the second terminal has the USU authorization.

For another example, the information #A includes USU authorization information of the second terminal. In this case, if the USU authorization information of the second terminal indicates that the second terminal has USU authorization, the core network element determines that the first terminal and the second terminal may perform USU communication. In this case, the core network element may consider by default that the first terminal has the USU authorization, or the core network element may learn, in another manner, that the first terminal has the USU authorization.

For another example, the information #A includes USU authorization information of the first terminal and USU authorization information of the second terminal. In this case, if the USU authorization information of the first terminal indicates that the first terminal has USU authorization, and the USU authorization information of the second terminal indicates that the second terminal has the USU authorization, the core network element determines that the first terminal and the second terminal may perform USU communication.

In another possible implementation, the core network element may determine, based on the access mode of the terminal, whether the terminal performs USU communication. For example, the information #A includes the access mode of the terminal.

For example, the information #A includes an access mode of the first terminal. In this case, if the access mode of the first terminal indicates that the first terminal uses satellite access, the core network element determines that the first terminal and the second terminal may perform USU communication. In this case, the core network element may consider by default that the second terminal also uses satellite access, or the core network element may learn, in another manner, that the second terminal also uses satellite access.

For another example, the information #A includes an access mode of the second terminal. In this case, if the access mode of the second terminal indicates that the second terminal uses satellite access, the core network element determines that the first terminal and the second terminal may perform USU communication. In this case, the core network element may consider by default that the first terminal also uses satellite access, or the core network element may learn, in another manner, that the first terminal also uses satellite access.

For another example, the information #A includes an access mode of the first terminal and an access mode of the second terminal. In this case, if the access mode of the first terminal indicates that the first terminal uses satellite access and the access mode of the second terminal indicates that the second terminal uses satellite access, the core network element determines that the first terminal and the second terminal may perform USU communication.

In another possible implementation, the core network element may determine, based on the information about the satellite serving the terminal (for example, the first terminal and/or the second terminal), whether the terminal performs USU communication. For example, the information #A includes the information about the satellite serving the terminal (for example, the first terminal and/or the second terminal).

For example, the information #A includes information about satellites serving the first terminal and the second terminal. In this case, if the first terminal and the second terminal are served by a same satellite, or are served by different satellites and there is a constellation link between the different satellites, the core network element determines that the first terminal and the second terminal may perform USU communication.

The foregoing several implementations are examples for description, and constitute no limitation. Any variation of the foregoing several implementations is applicable to embodiments of this application. In addition, the foregoing several possible implementations may be used independently, or may be used in combination.

Assuming that the core network element determines that USU communication is to be performed between the first terminal and the second terminal, optionally, the method 800 further includes step 804.

804: The core network element configures USU communication routing.

Specifically, the core network element configures to perform USU communication routing on the media data between the first terminal and the second terminal, that is, USU communication is to be performed between the first terminal and the second terminal.

The USU communication routing may alternatively be replaced with on-satellite local routing, and indicates that data is exchanged on the satellite and does not need to transit through the ground.

Specifically, if the core network element determines that USU communication is to be performed between the first terminal and the second terminal, the core network element may configure USU communication for the media data between the first terminal and the second terminal. For example, the core network element may configure, for IMS PDU sessions of the first terminal and the second terminal, an on-satellite (local) UPF and a data filtering rule and/or a data forwarding rule, so that data of the terminal is forwarded from the on-satellite UPF to an on-satellite gateway, to implement USU communication. The rule for filtering data includes, for example, a packet detection rule (packet detection rule, PDR), and the rule for forwarding data includes, for example, a forwarding action rule (forwarding action rule, FAR). For a specific configuration manner, refer to various existing or future-defined manners. This is not limited.

Optionally, the method 800 further includes step 805.

805: The core network element sends, to the IMS network element, a response to the information #A.

Specifically, after determining whether USU communication is to be performed between the first terminal and the second terminal, the core network element may further send, to the session control network element, the response to the information #A, to notify the session control network element whether USU communication is to be performed between the first terminal and the second terminal.

Further, optionally, after the core network element determines whether USU communication is to be performed between the first terminal and the second terminal, the core network element and/or the IMS network element may further notify a first terminal side and a second terminal side.

For example, if the core network element determines that USU communication is to be performed between the first terminal and the second terminal, and the core network element successfully configures USU communication, the core network element may notify the IMS network element. Then, the IMS network element may send address information of the first gateway (namely, the gateway deployed on the satellite) to the terminal (for example, the first terminal and/or the second terminal), so that the terminal can set a destination address to the address of the gateway on the satellite when sending data, to implement USU communication. Similarly, for example, if the media data between the first terminal and the second terminal transits through the ground, the IMS network element may send address information of a second gateway (namely, a gateway deployed on the ground) to the terminal (for example, the first terminal and/or the second terminal), so that the terminal can set a destination address to the address of the gateway on the ground when sending data.

For ease of understanding, the following describes a specific procedure applicable to embodiments of this application with reference to different scenarios and by using an example in which a first network element in an IMS is a P-CSCF network element, a first gateway is an IMS-AGW (to be specific, unless otherwise specified below, the IMS-AGW represents a gateway deployed on a satellite), a second gateway (namely, a gateway deployed on the ground) is referred to as a terrestrial access gateway (for example, a TrGW or an IMS-AGW), a first terminal is a calling UE, and a second terminal is a called UE. It may be understood that the procedure described below is merely an example for description, and embodiments of this application are not limited thereto. For content that is not described in detail below, refer to the descriptions in the method 500 or the method 800. Details are not described below.

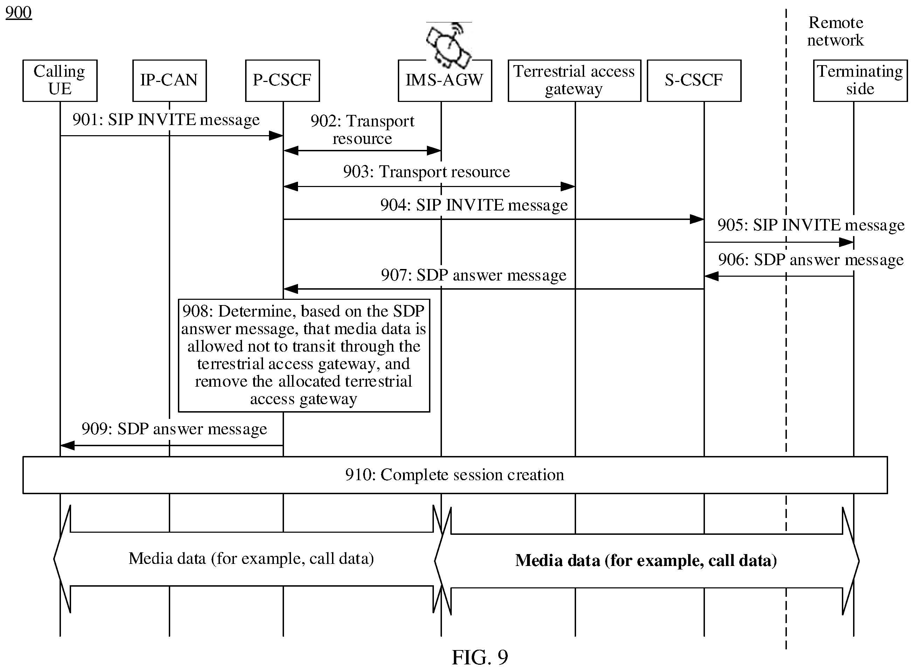

FIG. 9 is a schematic flowchart of a communication method 900 applicable to an embodiment of this application. For example, the method 900 may be used in a non-roaming scenario. The method 900 shown in FIG. 9 may include the following steps.

901: A calling UE sends a SIP INVITE message to a P-CSCF network element.

Specifically, the calling UE initiates a SIP session, and the SIP INVITE message may be routed to the P-CSCF network element via an IP connectivity access network (IP connectivity access network, IP-CAN). For example, the IP-CAN may include an EPS/a 5GS.

902: The P-CSCF network element interacts with an IMS-AGW to obtain a transport resource.

The IMS-AGW is deployed on a satellite.

The transport resource may be used for transmission of media data (for example, call data) of the calling UE. Specifically, the transport resource may be used for transmission of media data between the calling UE and a called UE. The obtaining the transport resource may alternatively be replaced with obtaining an IMS-AGW resource, that is, a transport resource used by the IMS-AGW for transmission of the media data of the calling UE.

The interaction indicates that transmission of signaling is performed between the P-CSCF network element and the IMS-AGW network element.

For example, after receiving the SIP INVITE message, the P-CSCF network element determines (or selects) the IMS-AGW deployed on the satellite, and interacts with the IMS-AGW to obtain the transport resource.

In a possible implementation, the P-CSCF network element may directly determine the IMS-AGW deployed on the satellite, and interact with the IMS-AGW to obtain the transport resource.

In another possible implementation, when determining that the calling UE uses satellite access, the P-CSCF network element determines the IMS-AGW deployed on the satellite, and interacts with the IMS-AGW to obtain the transport resource. In other words, if the calling UE does not use satellite access, the IMS-AGW deployed on the satellite may not be selected, that is, step 902 is not performed.

In another possible implementation, the P-CSCF network element determines, based on USU authorization information, the IMS-AGW deployed on the satellite, and interacts with the IMS-AGW to obtain the transport resource. For a manner in which the P-CSCF network element obtains the USU authorization information, refer to the foregoing method 600. Details are not described herein again. The following provides descriptions with reference to following several possible cases.

In a first possible case, the USU authorization information includes USU authorization information of the calling UE.

For example, after the P-CSCF network element receives the SIP INVITE message from the calling UE, the P-CSCF network element queries the USU authorization information of the calling UE, and learns, based on the USU authorization information of the calling UE, that the calling UE uses satellite access and has USU authorization. Therefore, the P-CSCF network element determines the IMS-AGW deployed on the satellite, and interacts with the IMS-AGW to obtain the transport resource.

Otherwise, if the calling UE does not use satellite access and/or the calling UE does not have the USU authorization, step 902 may not be performed.

In a second possible case, the USU authorization information includes USU authorization information of the called UE.

If the called UE and the calling UE register with a same P-CSCF network element, the P-CSCF network element may store the USU authorization information of the called UE.

For example, after the P-CSCF network element receives the SIP INVITE message from the calling UE, the P-CSCF network element queries the USU authorization information of the called UE of the calling UE, and learns, based on the USU authorization information of the called UE, that the called UE uses satellite access and has USU authorization. Therefore, the P-CSCF network element determines the IMS-AGW deployed on the satellite, and interacts with the IMS-AGW to obtain the transport resource.

Otherwise, if the called UE does not use satellite access and/or the called UE does not have the USU authorization, step 902 may not be performed.

In addition, in this case, it may be considered by default that the calling UE uses satellite access and has the USU authorization.

In a third possible case, the USU authorization information includes USU authorization information of the calling UE and USU authorization information of the called UE.

If the called UE and the calling UE register with a same P-CSCF network element, the P-CSCF network element may store the USU authorization information of the calling UE and the USU authorization information of the called UE.

For example, after the P-CSCF network element receives the SIP INVITE message from the calling UE, the P-CSCF network element queries the USU authorization information of the calling UE and the USU authorization information of the called UE of the calling UE, and learns, based on USU authorization information of the calling UE and the USU authorization information of the called UE, that the calling UE and the called UE use satellite access and have USU authorization. Therefore, the P-CSCF network element determines the IMS-AGW deployed on the satellite, and interacts with the IMS-AGW to obtain the transport resource.

Otherwise, if the calling UE and/or the called UE do/does use satellite access, step 902 may not be performed. In addition, if the calling UE and/or the called UE do/does not have the USU authorization, step 902 may not be performed.

In the foregoing several cases, an example in which the P-CSCF network element determines, based on the USU authorization information of the UE, whether the UE uses satellite access is used for description. This is not limited herein. As described in the method 500, the P-CSCF network element may alternatively determine, based on a P-access-network info field or a header in the SIP INVITE message, whether the UE uses satellite access, or may learn, from a UDM, whether the UE uses satellite access.

903: The P-CSCF network element interacts with a terrestrial access gateway to obtain a transport resource.

The terrestrial access gateway represents an access gateway deployed on the ground. To be specific, if the media data between the calling UE and the called UE transits through the ground, the terrestrial access gateway forwards the media data. For example, the media data is sent to an AGW deployed on the ground, then is sent from the AGW to a TrGW deployed on the ground, and is sent to a next device. For another example, the media data is sent to a TrGW deployed on the ground, and is sent to a next device.

The transport resource may be used for transmission of the media data (for example, call data) between the calling UE and the called UE. The obtaining the transport resource may alternatively be replaced with obtaining a resource of the terrestrial access gateway, that is, a transport resource of the terrestrial access gateway for transmission of the media data of the calling UE. It may be understood that the transport resource in step 902 is different from that in step 903. Specifically, the transport resource in step 902 is the resource used by the IMS-AGW for transmission of the media data of the calling UE, and the transport resource in step 903 is the resource used by the terrestrial access gateway for transmission of the media data of the calling UE.

For example, after receiving the SIP INVITE message, the P-CSCF network element determines the terrestrial access gateway deployed on the ground, and interacts with the terrestrial access gateway to obtain the transport resource used for transmission of the media data.

For example, when forwarding the SIP INVITE message, the P-CSCF network element complies with an OMR mechanism, to allow subsequent media data transmission not to transit through the terrestrial access gateway. For example, an IP address and information about an IP realm may be added/removed based on OMR in an interaction process of session description protocol (session description protocol, SDP) offer/SDP answer signaling. For an OMR mechanism, refer to a definition in the Annex Q in the standard TS23.228. Details are not described herein.

It may be understood that step 903 may not be performed. For example, if the P-CSCF network element determines, in step 902, that the calling UE and the called UE uses satellite access and have the USU authorization, the media data between the calling UE and the called UE may not transit through the ground. Therefore, the terrestrial access gateway does not need to be determined, that is, a ground transport resource does not need to be allocated, or step 903 may not be performed.

904: The P-CSCF network element forwards the SIP INVITE message to an S-CSCF network element.

905: The S-CSCF network element forwards the SIP INVITE message to a terminating side (terminating side).

The terminating side represents a network element related to the called UE. For example, the terminating side includes the called UE and a network element (for example, an S-CSCF network element) of a network in which the called UE is located. This is not limited herein.

906: The terminating side sends an SDP answer message to the S-CSCF network element.

Specifically, in response to the SIP INVITE message, the terminating side sends the SDP answer message.

907: The S-CSCF network element forwards the SDP answer message to the P-CSCF network element.

908: The P-CSCF network element determines, based on the SDP answer message, that the media data is allowed not to transit through the terrestrial access gateway, and removes the allocated terrestrial access gateway.

Specifically, after receiving the SDP answer message, the P-CSCF network element learns, based on the SDP answer message, that the media data (for example, the call data) between the calling UE and the called UE may not transit through the ground (namely, the terrestrial access gateway), that is, determines, based on the IP address and the information about the IP realm in the SDP answer message, that the data bypasses (passes around) the terrestrial access gateway. Therefore, the allocated terrestrial access gateway is removed, that is, the transport resource obtained through interaction with the terrestrial access gateway in step 903 is released.

909: The P-CSCF network element sends the SDP answer message to the calling UE.

910: The calling UE and the called UE complete session creation.

It may be understood that step 910 may further include another step for completing session creation. For example, refer to related descriptions in the Clause 5.6.2 of the standard TS23.228. Details are not described herein.

After the calling UE and the called UE complete session creation, the media data between the calling UE and the called UE may be locally exchanged via the IMS-AGW deployed on the satellite. That is, the media data between the calling UE and the called UE does not need to transit through the ground.

According to the foregoing solution, a media plane like an IMS-AGW in an IMS system is deployed on a satellite. In this way, the calling UE and the called UE may exchange media data via the IMS-AGW deployed on the satellite, and the media data may not transit through the ground. This shortens a delay of a satellite call and improves user experience. In addition, USU communication may be implemented through OMR. To be specific, a default path is from an access gateway on the satellite to an access gateway on the ground. If both the calling UE and the called UE use satellite access, the access gateway on the ground may be bypassed based on the OMR mechanism.

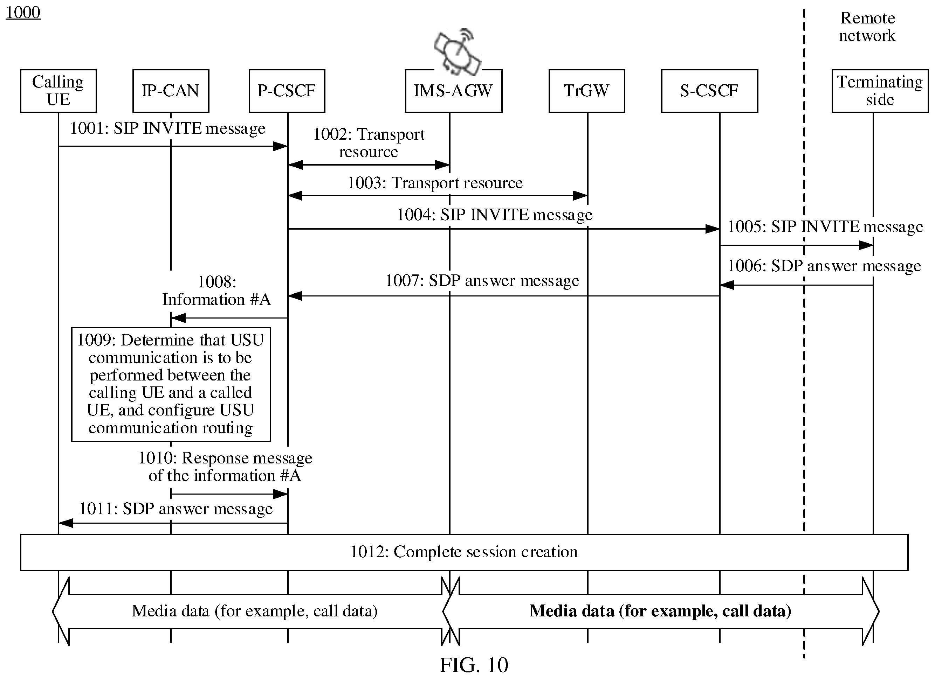

FIG. 10 is a schematic flowchart of a communication method 1000 applicable to an embodiment of this application. For example, the method 1000 may be used in a non-roaming scenario. The method 1000 shown in FIG. 10 may include the following steps.

1001: A calling UE sends a SIP INVITE message to a P-CSCF network element.

1002: The P-CSCF network element interacts with an IMS-AGW to obtain a transport resource.

1003: The P-CSCF network element interacts with a terrestrial access gateway to obtain a transport resource.

1004: The P-CSCF network element forwards the SIP INVITE message to an S-CSCF network element.

1005: The S-CSCF network element forwards the SIP INVITE message to a terminating side.

1006: The terminating side sends an SDP answer message to the S-CSCF network element.

1007: The S-CSCF network element forwards the SDP answer message to the P-CSCF network element.

1008: The P-CSCF network element sends information #A to a core network element (namely, an IP-CAN in the figure).

Optionally, when determining that the calling UE and a called UE are served by a same PCF network element, the P-CSCF network element sends the information #A to the core network element; or when determining that the calling UE and a called UE are served by a same PCF network element and a same SMF network element, the P-CSCF network element sends the information #A to the core network element.

Optionally, if the P-CSCF network element determines that USU communication may be performed between a first terminal and a second terminal (for example, in the first possible implementation to the seventh possible implementation mentioned in the method 500), the P-CSCF network element sends the information #A to the core network element. For example, if the P-CSCF network element determines that there is an inter-satellite link between the first terminal and the second terminal, or the P-CSCF network element determines that the first terminal and the second terminal are served by a same satellite, or the P-CSCF network element determines that the first terminal and the second terminal have USU authorization, the P-CSCF network element sends the information #A to the core network element.

The information #A indicates whether USU communication is to be performed between the calling UE and the called UE. For the information #A, refer to the related descriptions in the method 800. Details are not described herein again.

It may be understood that an example in which the P-CSCF network element sends the information #A to the core network element is used herein for description. This is not limited herein. For example, another IMS network element (for example, an S-CSCF network element) may alternatively send the information #A to the core network element.

It may be further understood that step 1008 may alternatively be performed before step 1002.

1009: The core network element determines that USU communication is to be performed between the calling UE and the called UE, and configures USU communication routing.

Specifically, after determining that USU communication is to be performed between the calling UE and the called UE, the core network element may configure the USU communication routing for the calling UE and the called UE, so that media data between the calling UE and the called UE can be exchanged on the satellite.

In the method 1000, it is assumed that USU communication may be performed between the calling UE and the called UE, that is, the core network element determines that USU communication is to be performed between the calling UE and the called UE.

For step 1009, refer to the related descriptions in the method 800, for example, step 803. Details are not described herein.

1010: The core network element sends a response message of the information #A to the P-CSCF network element.

1011: The P-CSCF network element sends an SDP answer message to the calling UE.

Optionally, the P-CSCF network element further sends address information of the IMS-AGW to the calling UE. The address information of the IMS-AGW is included in the SDP answer message.

After receiving the response to the information #A, the P-CSCF network element learns that USU communication can be performed between the calling UE and the called UE. Therefore, the P-CSCF network element may send address information of an IMS-AGW deployed on the satellite to the calling UE, so that the calling UE can set a destination address to an address of the access gateway on the satellite when sending data, to implement USU communication. In addition, when learning that USU communication is not performed between the calling UE and the called UE, the P-CSCF may send address information of an IMS-AGW deployed on the ground to the calling UE, so that the calling UE can set a destination address to an address of the access gateway on the ground when sending data. In this way, data is routed through the ground.

1012: The calling UE and the called UE complete session creation.

It may be understood that step 1012 may further include another step for completing session creation. For example, refer to related descriptions in the Clause 5.6.2 of the standard TS23.228. Details are not described herein.

After the calling UE and the called UE complete session creation, the media data between the calling UE and the called UE may be locally exchanged via the IMS-AGW deployed on the satellite. That is, the media data between the calling UE and the called UE does not need to transit through the ground.

According to the foregoing solution, a media plane like an IMS-AGW in an IMS system is deployed on a satellite. In this way, the calling UE and the called UE may exchange media data via the IMS-AGW deployed on the satellite, and the media data may not transit through the ground. This shortens a delay of a satellite call and improves user experience. In addition, the media data between the calling UE and the called UE may be exchanged on the satellite through configuration of a core network. In addition, on-board exchanging may be implemented through configuration of the core network. To be specific, media data sent by the UE is routed to an access gateway on a satellite based on the configuration of the core network and a destination IP address filled by the UE. In addition, for example, if on-board exchanging is implemented through configuration of the core network, this is applicable to a scenario in which a corresponding IMS PDU session has two anchors (anchors). For differentiation, the two anchors are referred to as a UPF anchor 1 and a UPF anchor 2, and there are an I (middle)-UPF, a ULCL (uplink classifier), a BranchPoint (branch point), and an LPSA UPF (local PDU session anchor) on the satellite.

It may be understood that the foregoing method 1000 is described by using a calling UE side as an example. It should be noted that logic of the IMS network element and the core network in the method is also applicable to a called UE side. To be specific, the IMS network element on the called UE side interacts with the core network element, so that on-board exchanging is implemented via a core network element. For example, after receiving an SDP answer response sent by the called UE, a P-CSCF network element of the called UE may send information #A to the core network element, so that the core network element determines that USU communication is to be performed between the calling UE and the called UE, and configures USU communication routing.

It should be noted that the core network element may determine, based on a request from the P-CSCF serving the calling UE and/or the P-CSCF serving the called UE, that USU communication is to be performed between the calling UE and the called UE.

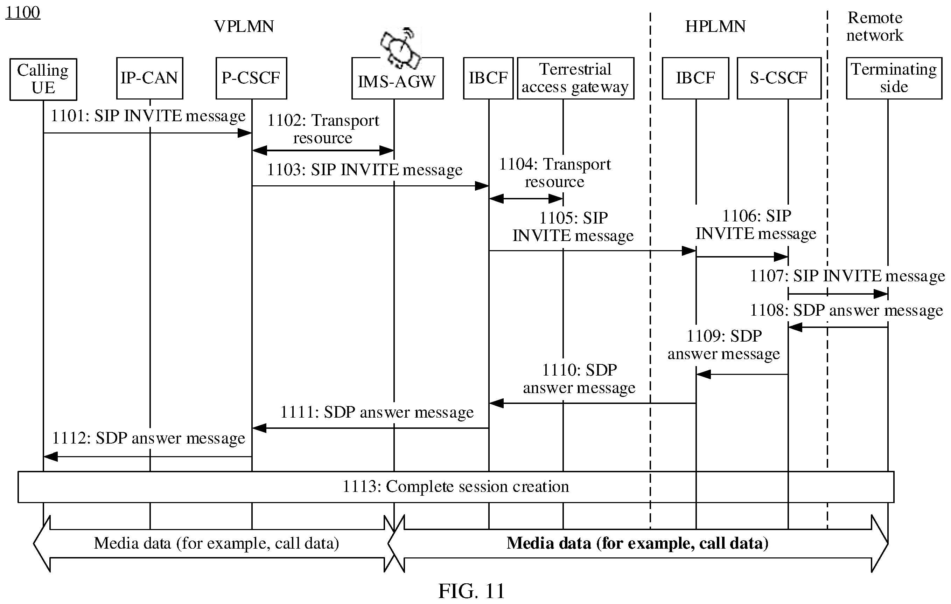

FIG. 11 is a schematic flowchart of a communication method 1100 applicable to an embodiment of this application. The method 1100 may be used in a roaming scenario, for example, a calling UE roams from an HPLMN to a VPLMN. The method 1100 shown in FIG. 11 may include the following steps.

1101: The calling UE sends a SIP INVITE message to a P-CSCF network element in the VPLMN.

1102: The P-CSCF network element in the VPLMN interacts with an IMS-AGW in the VPLMN to obtain a transport resource.

For example, the P-CSCF network element in the VPLMN may allocate the transport resource on the IMS-AGW according to an operator policy.

1103: The P-CSCF network element in the VPLMN forwards the SIP INVITE message to an IBCF network element in the VPLMN.

1104: The IBCF network element in the VPLMN interacts with a terrestrial access gateway in the VPLMN to obtain a transport resource.

It may be understood that step 1104 may not be performed. For example, it may be considered by default that the calling UE and the called UE can perform USU communication. Therefore, step 1104 may not be performed.

1105: The IBCF network element in the VPLMN forwards the SIP INVITE message to an IBCF network element in the HPLMN.

When the UE roams to a satellite PLMN (namely, the VPLMN), the HPLMN (for example, the IBCF network element in the HPLMN) may determine, according to the operator policy, not to perform home routing (that is, not to allocate a terrestrial access gateway resource in the HPLMN). For example, if the UE uses satellite access, the HPLMN determines not to perform home routing. For another example, if the UE has USU authorization, the HPLMN determines not to perform home routing. For another example, if the UE uses satellite access and has USU authorization, the HPLMN determines not to perform home routing. This solution is described in detail below with reference to 1200 and 1300.

1106: The IBCF network element in the HPLMN forwards the SIP INVITE message to an S-CSCF network element in the HPLMN.

1107: The S-CSCF network element in the HPLMN forwards the SIP INVITE message to a terminating side.

1108: The terminating side sends an SDP answer message to the S-CSCF network element in the HPLMN.

1109: The S-CSCF network element in the HPLMN forwards the SDP answer message to the IBCF network element in the HPLMN.

1110: The IBCF network element in the HPLMN forwards the SDP answer message to the IBCF network element in the VPLMN.

In addition, the IBCF network element in the VPLMN determines, based on the SDP answer message, that media data between the calling UE and a called UE may not transit through the ground (namely, the terrestrial access gateway allocated in step 1104). Therefore, the terrestrial access gateway allocated between the VPLMN and the HPLMN may be removed based on OMR.

1111: The IBCF network element in the VPLMN forwards the SDP answer message to the P-CSCF network element in the VPLMN.

1112: The P-CSCF network element in the VPLMN sends the SDP answer message to the calling UE.

For example, the P-CSCF network element in the VPLMN modifies the SDP answer message, and sends a modified SDP answer message to the calling UE.

1113: The calling UE and the called UE complete session creation.

After the calling UE and the called UE complete session creation, the media data between the calling UE and the called UE may be locally exchanged via the IMS-AGW deployed on the satellite. That is, the media data between the calling UE and the called UE does not need to transit through the ground.

The method 1100 is similar to the method 900, and a difference lies in that in the method 1100, a network element in the VPLMN may interact with a network element in the HPLMN via the IBCF network elements. In addition, in the method 1100, the P-CSCF network element may obtain USU authorization information of the UE by using the method 700. In addition, during roaming, the HPLMN may determine, based on at least one of satellite access of the UE, USU authorization of the UE, an allowed USU communication indication, and the like, not to perform home routing.

According to the foregoing solution, a media plane like an IMS-AGW in an IMS system is deployed on a satellite. In this way, the calling UE and the called UE may exchange media data via the IMS-AGW deployed on the satellite, and the media data may not transit through the ground. This shortens a delay of a satellite call and improves user experience. In addition, when the calling UE roams, routing may be performed in an LBO roaming manner, to exchange media data on the satellite.

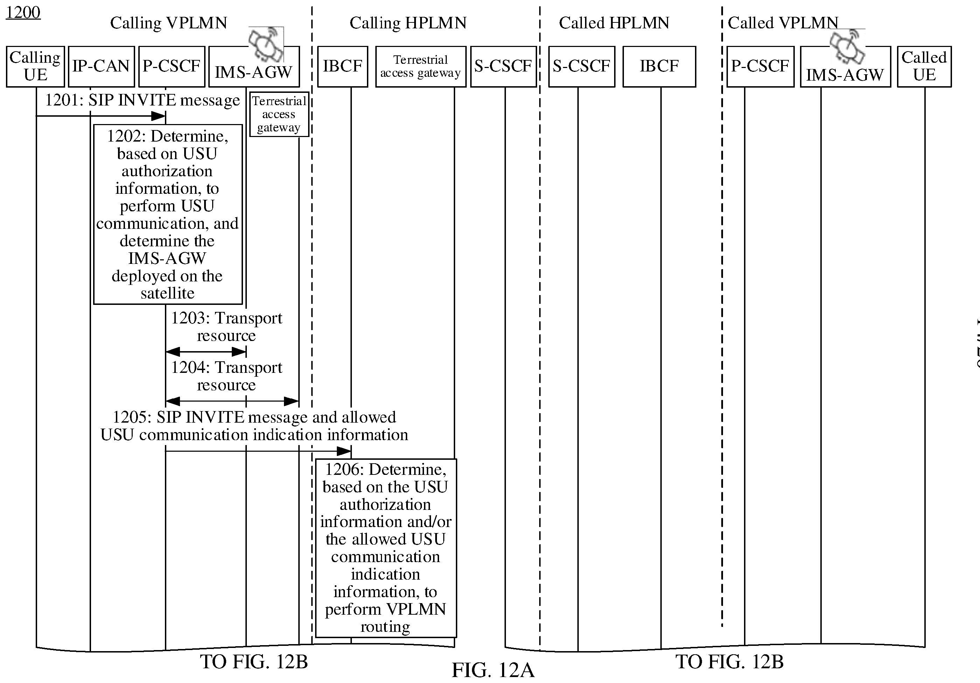

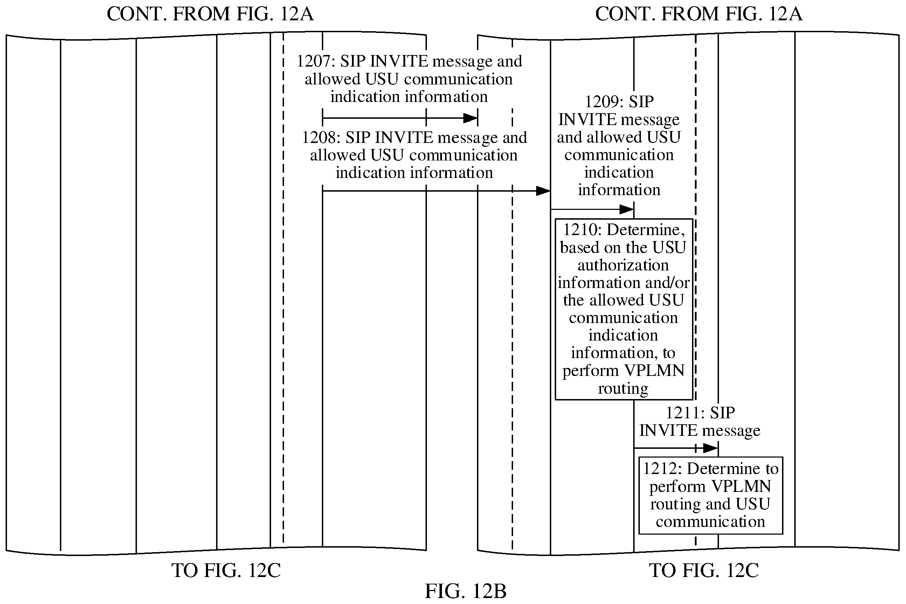

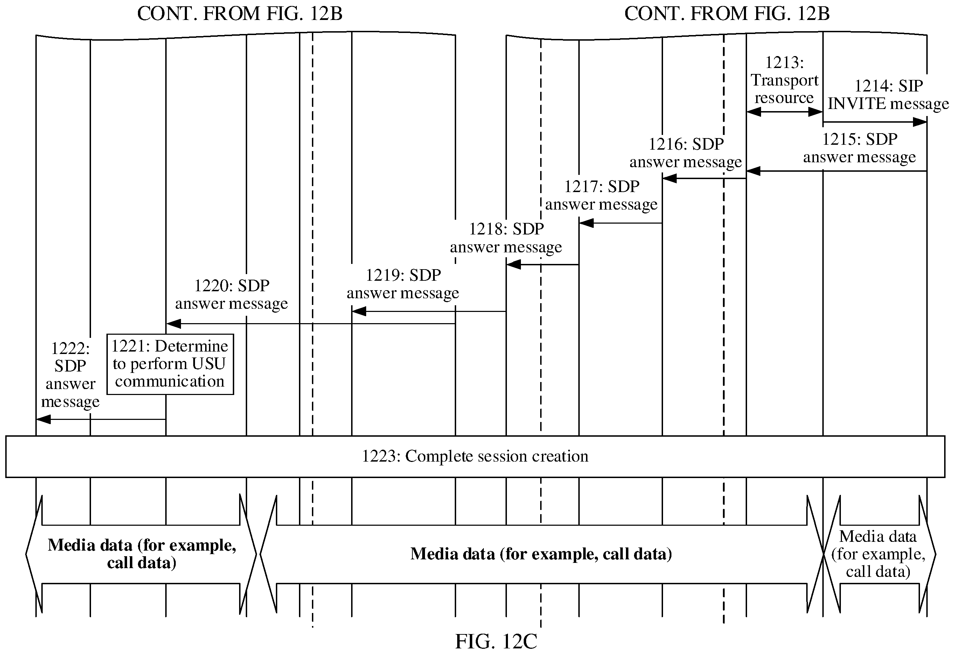

FIG. 12A to FIG. 12C are a schematic flowchart of a communication method 1200 applicable to an embodiment of this application. The method 1200 may be used in a roaming scenario, for example, a calling UE and a called UE each roam from an HPLMN to a VPLMN. In addition, in the method 1200, a network element in the HPLMN may determine, based on USU authorization information and allowed USU communication indication information, to perform VPLMN routing. The method 1200 shown in FIG. 12A to FIG. 12C may include the following steps.

1201: The calling UE sends a SIP INVITE message to a P-CSCF network element in the calling VPLMN.

For differentiation, the VPLMN in which the calling party is located is referred to as a calling VPLMN, and the HPLMN corresponding to the calling party is referred to as a calling HPLMN. Similarly, a VPLMN in which the called party is located is referred to as a called VPLMN, and an HPLMN corresponding to the called party is referred to as a called HPLMN.

1202: The P-CSCF network element in the calling VPLMN determines, based on the USU authorization information, to perform USU communication, and determines an IMS-AGW deployed on a satellite.

Specifically, if the P-CSCF network element in the calling VPLMN determines, based on the USU authorization information, that the calling UE and the called UE may perform USU communication, the P-CSCF network element may determine the IMS-AGW deployed on the satellite, for transmission of media data (for example, call data) between the calling UE and the called UE.

As described in step 502, the P-CSCF network element in the calling VPLMN may alternatively directly determine the IMS-AGW deployed on the satellite, or determine the IMS-AGW deployed on the satellite when a specific condition is met (for example, the first possible implementation to the seventh possible implementation in the foregoing method 500). This is not limited herein. In the method 1200, for example, only a solution in which the P-CSCF network element in the calling VPLMN determines, based on the USU authorization information, the IMS-AGW deployed on the satellite is shown.

1203: The P-CSCF network element in the calling VPLMN interacts with the IMS-AGW in the calling VPLMN to obtain a transport resource.

Specifically, the P-CSCF network element in the calling VPLMN interacts with the IMS-AGW that is determined in step 1202 and that is deployed on the satellite, to obtain the transport resource for transmission of media data of the calling UE and the called UE.

For steps 1202 and 1203, refer to step 902 in the method 900. Details are not described herein.

1204: The P-CSCF network element in the calling VPLMN interacts with a terrestrial access gateway in the calling VPLMN to obtain a transport resource.

It may be understood that step 1204 may not be performed. For example, it may be considered by default that the calling UE and the called UE can perform USU communication. Therefore, step 1204 may not be performed. For details, refer to step 903 in the method 900. Details are not described herein.

1205: The P-CSCF network element in the calling VPLMN sends the SIP INVITE message to an IBCF network element in the calling HPLMN.

Optionally, the P-CSCF network element in the calling VPLMN sends the allowed USU communication indication information to the IBCF network element in the calling HPLMN. The allowed USU communication indication information may be carried in the SIP INVITE message, or sent through separate signaling. This is not limited herein.

The allowed USU communication indication information (or referred to as indication information for short) indicates that the media data can (or is allowed or requested to) be exchanged on the satellite, that is, the media data of the calling UE and the called UE does not transit through the ground. The calling party may notify the called party through the allowed USU communication indication information that the calling method may perform USU communication. Correspondingly, after learning that the calling party may perform USU communication, the called party may also perform USU communication. For example, the called party may determine, based on the manner (for example, the first possible implementation to the seventh possible implementation) mentioned in the method 500, whether to perform USU communication.

It may be understood that a name of the allowed USU communication indication information is merely an example, and the name of the allowed USU communication indication information does not limit the protection scope of embodiments of this application.

1206: The IBCF network element in the calling HPLMN determines, based on the USU authorization information and/or the allowed USU communication indication information, to perform VPLMN routing.

The IBCF network element in the calling HPLMN may obtain the USU authorization information of the UE in an IMS registration process of the UE (for example, the calling UE). For details, refer to the related descriptions in the method 700. Details are not described herein again.

Performing VPLMN routing indicates that the media data of the calling UE may be directly forwarded by a network element in the VPLMN (for example, the IMS-AGW in the VPLMN) without transiting through the HPLMN. Specifically, the media data of the calling UE may be directly sent by the calling VPLMN to a called party, and does not need to be sent from the calling VPLMN to the calling HPLMN, and then sent by the calling HPLMN to the called party.

Specifically, after the IBCF network element in the calling HPLMN determines to perform VPLMN routing, the media data between the calling UE and the called UE may not transit through the HPLMN. Therefore, a terrestrial access gateway resource (terrestrial access gateway resource) in the HPLMN may not be allocated. Otherwise, if the IBCF network element in the calling HPLMN determines not to perform VPLMN routing, that is, the media data between the calling UE and the called UE needs to transit through the HPLMN, the IBCF network element in the calling HPLMN needs to allocate a terrestrial access gateway resource in the HPLMN.

In a possible implementation, the IBCF network element in the calling HPLMN determines, based on the USU authorization information, to perform VPLMN routing. For example, the USU authorization information includes USU authorization information of the calling UE. If the USU authorization information of the calling UE indicates that the calling UE has USU authorization, the IBCF network element in the calling HPLMN determines to perform VPLMN routing. Otherwise, if the USU authorization information of the calling UE indicates that the calling UE does not have USU authorization, the IBCF network element in the calling HPLMN determines not to perform VPLMN routing.

In another possible implementation, the IBCF network element in the calling HPLMN determines, based on the allowed USU communication indication information, to perform VPLMN routing. For example, if the IBCF network element in the calling HPLMN receives the allowed USU communication indication from the P-CSCF network element in the calling VPLMN, the IBCF network element in the calling HPLMN determines to perform VPLMN routing. Otherwise, if the IBCF network element in the calling HPLMN does not receive the allowed USU communication indication from the P-CSCF network element in the calling VPLMN (or the IBCF network element in the calling HPLMN receives a disallowed USU communication indication from the P-CSCF network element in the calling VPLMN), the IBCF network element in the calling HPLMN determines not to perform VPLMN routing.

In another possible implementation, the IBCF network element in the calling HPLMN determines, based on the USU authorization information and the allowed USU communication indication information, to perform VPLMN routing. For example, if the IBCF network element in the calling HPLMN receives the allowed USU communication indication from the P-CSCF network element in the calling VPLMN, and the USU authorization information of the calling UE indicates that the calling UE has USU authorization, the IBCF network element in the calling HPLMN determines to perform VPLMN routing. Otherwise, the IBCF network element in the calling HPLMN determines not to perform VPLMN routing.

The foregoing several implementations are examples for description. This is not limited. For example, the IBCF network element in the calling HPLMN may alternatively directly determine to perform VPLMN routing, or determine to perform VPLMN routing when a specific condition is met. This is not limited herein. For the met condition, refer to the conditions (namely, the first possible implementation to the seventh possible implementation) referenced when the session control network element determines the first access gateway in the method 500. Details are not described herein again.

Further, the calling IMS may indicate, to the called IMS, whether "USU communication is allowed", that is, whether the media data between the calling UE and the called UE can be exchanged on the satellite without transiting through the ground. Optionally, the calling VPLMN indicates the calling HPLMN to send whether "USU communication is allowed" to the called IMS. For example, when the called UE is also a roaming UE (for example, the calling VPLMN is not the called HPLMN), the calling HPLMN may be indicated to perform sending. When the called party is a non-roaming UE (for example, the calling VPLMN is the called HPLMN), the calling HPLMN may not be indicated or may be indicated not to perform sending.

For example, the calling IMS may indicate, to the called IMS, whether "USU communication is allowed". For details, refer to steps 1207 to 1209.

1207: The IBCF network element in the calling HPLMN sends the SIP INVITE message to an S-CSCF network element in the calling HPLMN.

Optionally, the IBCF network element in the calling HPLMN further sends the allowed USU communication indication information to the S-CSCF network element in the calling HPLMN.

1208: The S-CSCF network element in the calling HPLMN sends the SIP INVITE message to an S-CSCF network element in the called HPLMN.

Optionally, the S-CSCF network element in the calling HPLMN further sends the allowed USU communication indication information to the S-CSCF network element in the called HPLMN.

1209: The S-CSCF network element in the called HPLMN sends the SIP INVITE message to an IBCF network element in the called HPLMN.

Optionally, the S-CSCF network element in the called HPLMN further sends the allowed USU communication indication information to the IBCF network element in the called HPLMN.

1210: The IBCF network element in the called HPLMN determines, based on the USU authorization information and/or the allowed USU communication indication information, to perform VPLMN routing.

For example, the USU authorization information includes USU authorization information of the called UE.

It may be understood that, if the called UE also roams, VPLMN routing may also be performed (that is, no terrestrial access gateway resource is allocated in the HPLMN).

For step 1210, refer to step 1206. Details are not described herein again.

1211: The IBCF network element in the called HPLMN sends the SIP INVITE message to a P-CSCF network element in the called VPLMN.

1212: The P-CSCF network element in the called VPLMN determines to perform VPLMN routing and USU communication.

1213: The P-CSCF network element in the called VPLMN interacts with an IMS-AGW in the called VPLMN to obtain a transport resource.

1214: The IMS-AGW in the called VPLMN sends the SIP INVITE message to the called UE.

Alternatively, in step 1214, the P-CSCF network element in the called VPLMN may alternatively send the SIP INVITE message to the called UE.

1215: The called UE sends an SDP answer message to the P-CSCF network element in the called VPLMN.

1216: The P-CSCF network element in the called VPLMN sends the SDP answer message to the IBCF network element in the called HPLMN.

1217: The IBCF network element in the called HPLMN sends the SDP answer message to the S-CSCF network element in the called HPLMN.

1218: The S-CSCF network element in the called HPLMN sends the SDP answer message to the S-CSCF network element in the calling HPLMN.

1219: The S-CSCF network element in the calling HPLMN sends the SDP answer message to the IBCF network element in the calling HPLMN.

1220: The IBCF network element in the calling HPLMN sends the SDP answer message to the P-CSCF network element in the calling VPLMN.

1221: The P-CSCF network element in the calling VPLMN determines to perform USU communication.

Specifically, the P-CSCF network element in the calling VPLMN may determine, based on the SDP answer message, to perform USU communication, that is, the media data between the calling UE and the called UE is exchanged on a satellite without transiting through the ground. Therefore, further, optionally, the P-CSCF network element in the calling VPLMN may remove the terrestrial access gateway in the calling VPLMN based on the OMR. If a terrestrial access gateway is also allocated in the HPLMN, the terrestrial access gateway may also be removed.

1222: The P-CSCF network element in the calling VPLMN sends the SDP answer message to the calling UE.

1223: The calling UE and the called UE complete session creation.

According to the foregoing solution, a media plane like an IMS-AGW in an IMS system is deployed on a satellite. In this way, the calling UE and the called UE may exchange media data via the IMS-AGW deployed on the satellite, and the media data may not transit through the ground. This shortens a delay of a satellite call and improves user experience. In addition, when the calling UE is a roaming UE, the calling HPLMN (for example, the IBCF network element in the calling HPLMN) may determine, based on the USU authorization information (for example, the USU authorization information of the calling UE) and the allowed USU communication indication information, whether to perform VPLMN routing. In addition, if the called UE is also a roaming UE, the called HPLMN (for example, the IBCF network element in the called HPLMN) may also determine, based on the USU authorization information (for example, the USU authorization information of the called UE) and the allowed USU communication indication information, whether to perform VPLMN routing. In addition, when VPLMN routing is performed, a terrestrial access gateway resource may not be allocated in the HPLMN.

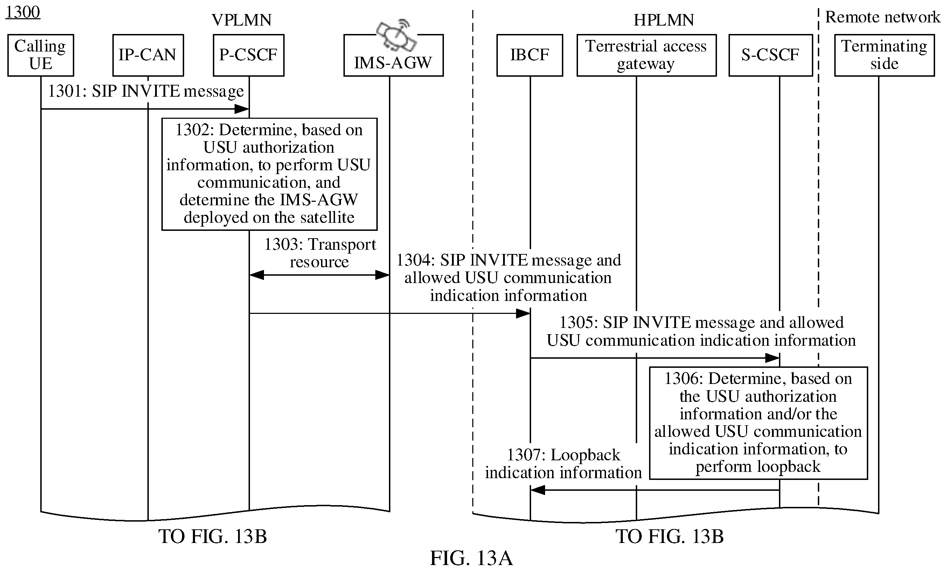

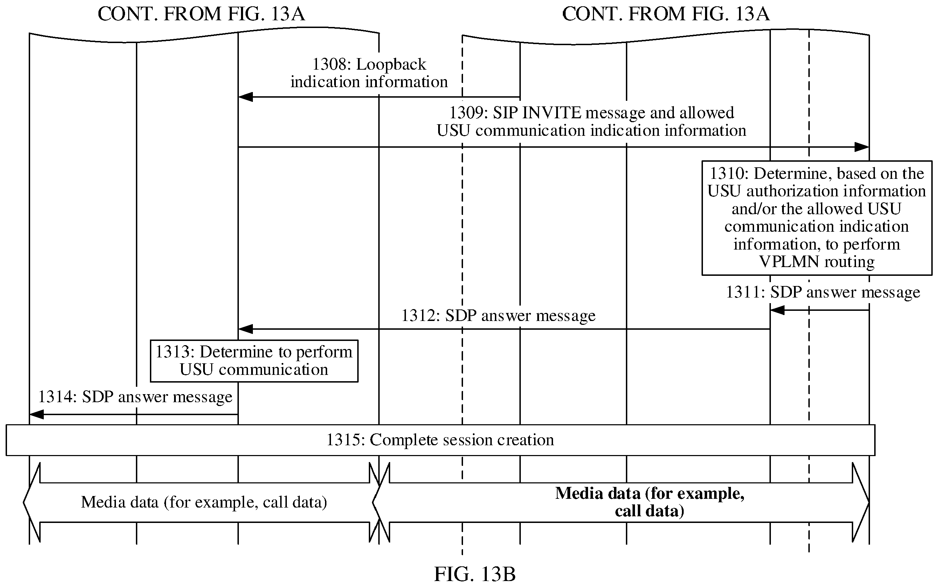

FIG. 13A and FIG. 13B are a schematic flowchart of a communication method 1300 applicable to an embodiment of this application. The method 1300 may be used in a roaming scenario, for example, a calling UE roams from an HPLMN to a VPLMN. In addition, in the method 1300, a network element in the HPLMN may determine, based on USU authorization information, to perform loopback. The method 1300 shown in FIG. 13A and FIG. 13B may include the following steps.

1301: The calling UE sends a SIP INVITE message to a P-CSCF network element in the calling VPLMN.

1302: The P-CSCF network element in the calling VPLMN determines, based on the USU authorization information, to perform USU communication, and determines an IMS-AGW deployed on a satellite.

Same as step 1202, the P-CSCF network element in the calling VPLMN may alternatively directly determine the IMS-AGW deployed on the satellite, or determine the IMS-AGW deployed on the satellite when a specific condition is met (for example, the first possible implementation to the seventh possible implementation in the foregoing method 500). This is not limited herein.

1303: The P-CSCF network element in the calling VPLMN interacts with the IMS-AGW in the calling VPLMN to obtain a transport resource.

Optionally, the P-CSCF network element in the calling VPLMN interacts with a terrestrial access gateway in the calling VPLMN to obtain a transport resource.

1304: The P-CSCF network element in the calling VPLMN sends the SIP INVITE message to an IBCF network element in the calling HPLMN.

Optionally, the P-CSCF network element in the calling VPLMN further sends allowed USU communication indication information to the IBCF network element in the calling HPLMN.

1305: The IBCF network element in the calling HPLMN sends the SIP INVITE message to an S-CSCF network element in the calling HPLMN.

Optionally, the IBCF network element in the calling HPLMN further sends the allowed USU communication indication information to the S-CSCF network element in the calling HPLMN.

1306: The S-CSCF network element in the calling HPLMN determines, based on the USU authorization information and/or the allowed USU communication indication information, to perform loopback.

The loopback is to perform VPLMN routing, and indicates that a call procedure and media data of the calling UE may be directly routed and forwarded by a network element in the VPLMN (for example, the IMS-AGW in the VPLMN) without transiting through the HPLMN. Specifically, the call procedure and the media data of the calling UE may be directly sent by the calling VPLMN to a called party, and does not need to be sent from the calling VPLMN to the calling HPLMN, and then sent by the calling HPLMN to the called party.

In a possible implementation, the S-CSCF network element in the calling HPLMN determines, based on the USU authorization information, to perform loopback. For example, the USU authorization information includes USU authorization information of the calling UE. If the USU authorization information of the calling UE indicates that the calling UE has USU authorization, the S-CSCF network element in the calling HPLMN determines to perform loopback. Otherwise, if the USU authorization information of the calling UE indicates that the calling UE does not have USU authorization, the S-CSCF network element in the calling HPLMN determines not to perform loopback. In this case, in step 1304, the P-CSCF network element in the calling VPLMN may alternatively not send the allowed USU communication indication information.

In another possible implementation, the S-CSCF network element in the calling HPLMN determines, based on the allowed USU communication indication information, to perform loopback. For example, if the S-CSCF network element in the calling HPLMN receives the allowed USU communication indication from the P-CSCF network element in the calling VPLMN, the S-CSCF network element in the calling HPLMN determines to perform loopback. Otherwise, if the S-CSCF network element in the calling HPLMN does not receive the allowed USU communication indication from the P-CSCF network element in the calling VPLMN (or the S-CSCF network element in the calling HPLMN receives a disallowed USU communication indication from the P-CSCF network element in the calling VPLMN), the S-CSCF network element in the calling HPLMN determines not to perform loopback.

In another possible implementation, the S-CSCF network element in the calling HPLMN determines, based on the USU authorization information and the allowed USU communication indication information, to perform loopback. For example, if the S-CSCF network element in the calling HPLMN receives the allowed USU communication indication from the P-CSCF network element in the calling VPLMN, and the USU authorization information of the calling UE indicates that the calling UE has USU authorization, the S-CSCF network element in the calling HPLMN determines to perform loopback Otherwise, the S-CSCF network element in the calling HPLMN determines not to perform loopback.

The foregoing several implementations are examples for description. This is not limited. For example, the S-CSCF network element in the calling HPLMN may alternatively directly determine to perform loopback, or determine to perform loopback when a specific condition is met. This is not limited herein. For the met condition, refer to the conditions (namely, the first possible implementation to the seventh possible implementation) referenced when the session control network element determines the first access gateway in the method 500. Details are not described herein again.

Further, optionally, the calling HPLMN may notify the calling VPLMN to perform loopback, for example, steps 1307 and 1308.

1307: The S-CSCF network element in the calling HPLMN sends loopback indication information to the IBCF network element in the calling HPLMN.

The loopback indication information indicates that loopback is allowed to be performed.

Optionally, the S-CSCF network element in the calling HPLMN may further send the SIP INVITE message of the calling UE to the IBCF network element in the calling HPLMN.

1308: The IBCF network element in the calling HPLMN sends the loopback indication information to the P-CSCF network element in the calling VPLMN.

Optionally, the IBCF network element in the calling HPLMN may further send the SIP INVITE message of the calling UE to the P-CSCF network element in the calling VPLMN.

1309: The P-CSCF network element in the calling VPLMN sends the SIP INVITE message and the allowed USU communication indication information to a terminating side.

1310: The terminating side determines, based on the USU authorization information and/or the USU communication indication, to perform loopback.

The USU authorization information may include the USU authorization information of the calling UE and/or USU authorization information of a called UE.

For a specific operation of the terminating side, refer to the related operations of the called party (for example, the called UE, the called VPLMN, and the network element in the called HPLMN) in 1200. Details are not described herein again.

1311: The terminating side sends an SDP answer message to the S-CSCF network element in the calling HPLMN.

1312: The S-CSCF network element in the calling HPLMN sends the SDP answer message to the P-CSCF network element in the calling VPLMN.

Specifically, the S-CSCF network element in the calling HPLMN may send the SDP answer message to the P-CSCF network element in the calling VPLMN via an IBCF network element (for example, the IBCF network element in the calling HPLMN and/or an IBCF network element in the calling VPLMN).

1313: The P-CSCF network element in the calling VPLMN determines to perform USU communication.

In other words, the P-CSCF network element in the calling VPLMN configures USU communication.

1314: The P-CSCF network element in the calling VPLMN sends the SDP answer message to the calling UE.

1315: The calling UE and the called UE complete session creation.

The method 1300 is similar to the method 1200, and a difference lies in that in the method 1300, when a UE (for example, the calling UE) accesses a network via a satellite, an HPLMN (for example, an S-CSCF network element in the HPLMN) determines to perform loopback, and sends a loopback indication to a VPLMN (for example, a P-CSCF network element in the VPLMN).

The foregoing describes several possible call procedures by using examples with reference to FIG. 9 to FIG. 13B. The foregoing steps are merely examples for description. This is not strictly limited. For example, in the foregoing 9 to 13, the P-CSCF network element determines, based on the USU authorization information, the IMS-AGW deployed on the satellite. However, this is not limited. For example, the P-CSCF network element may alternatively directly determine the IMS-AGW deployed on the satellite. For details, refer to the descriptions in step 502. In addition, sequence numbers of the foregoing processes do not mean a sequence of execution. The sequence of execution of the processes should be determined based on functions and internal logic of the processes, and should not constitute any limitation on an implementation process of embodiments of this application. In addition, the foregoing solutions may be properly combined. For example, for operations related to the terminating side in the method 900, 1100, and 1300, refer to the description in the method 1200.

The OMR mechanism is mentioned above. The following briefly describes the OMR mechanism.

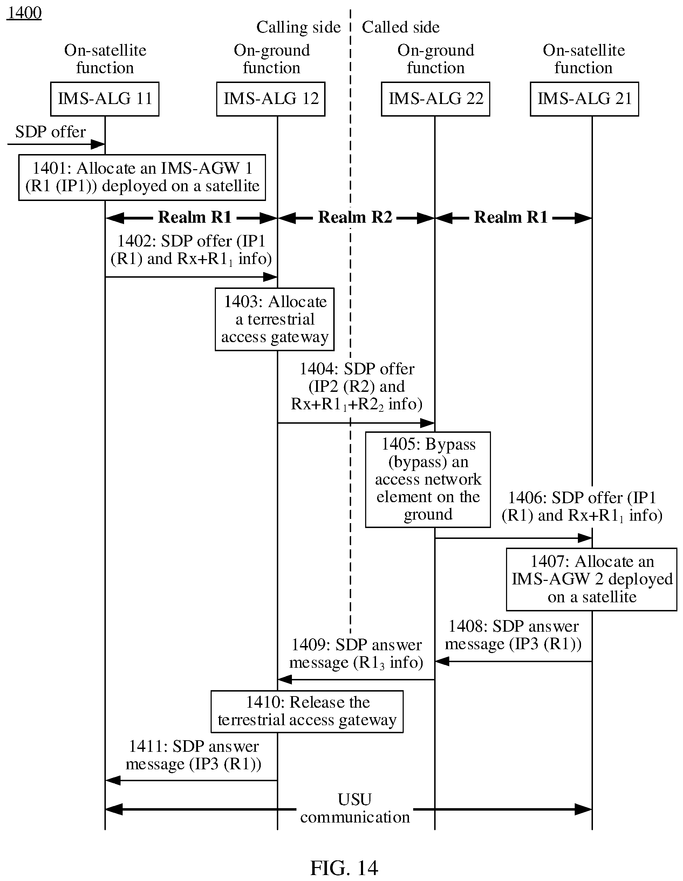

FIG. 14 is a diagram of an OMR mechanism applicable to an embodiment of this application. In the method 1400, a functional module IMS-ALG in a P-CSCF network element is mainly used as an example for description. It is assumed that IMS-ALGs are deployed on both a satellite and the ground. For differentiation, on a calling side, the IMS-ALG deployed on the satellite is referred to as an IMS-ALG 11, and the IMS-ALG deployed on the ground is referred to as an IMS-ALG 12; and on a called side, the IMS-ALG deployed on the satellite is referred to as an IMS-ALG 21, and an IMS-ALG deployed on the ground is referred to as an IMS-ALG 22. The method 1400 may be used in the foregoing methods 900-1300. The method 1400 shown in FIG. 14 may include the following steps.

1401: After receiving an SDP offer from a calling UE, the IMS-ALG 11 allocates an IMS-AGW 1 deployed on the satellite.

For differentiation, the IMS-AGW deployed on the satellite on the calling side is referred to as an IMS-AGW 1, and the IMS-AGW deployed on the satellite on the called side is referred to as an IMS-AGW 2.

Specifically, the calling UE sends a SIP INVITE message to the IMS-ALG 11. The SIP INVITE message includes the SDP offer. After receiving the SDP offer, the IMS-ALG 11 allocates the IMS-AGW 1 deployed on the satellite, to perform transmission of media data between the calling UE and a called UE on the satellite. As shown in FIG. 14, it is assumed that the IMS-ALG 11 and the IMS-ALG 12 are located in a realm (realm) R1. To be specific, a realm in which the IMS-AGW 1 is located is R1, and an address is IP1. Rx indicates a previously associated IP realm.

1402: The IMS-ALG 11 forwards the SDP offer to the IMS-ALG 12.

1403: The IMS-ALG 12 allocates a terrestrial access gateway.

Specifically, after receiving the SDP offer, the IMS-ALG 12 may allocate the access gateway deployed on the ground, to perform transmission of the media data between the calling UE and the called UE on the ground.

It is assumed that the IMS-ALG 12 and the IMS-ALG 21 are located in a realm R2. To be specific, a realm in which the terrestrial access gateway is located is R2, and an address is IP2.

1404: The IMS-ALG 12 forwards the SDP offer to the IMS-ALG 22.

1405: An outgoing domain (outgoing realm) of the IMS-ALG 22 is R1. Therefore, the IMS-ALG 22 passes around (bypasses) an access network element on the ground.

Specifically, if the realm in which the called side is located is the same as the realm in which the calling side is located, that is, both are R1, the IMS-ALG 22 allocates no terrestrial access gateway. Alternatively, when the called UE is a roaming UE, no terrestrial access gateway is allocated either.

1406: The IMS-ALG 22 forwards the SDP offer to the IMS-ALG 21.

It can be learned from FIG. 14 that, because the realm in which the called side is located and the realm in which the calling side is located are R1, when the IMS-ALG 22 forwards the SDP offer to the IMS-ALG 21, R2 and IP2 are removed (or bypassed or passed around) from carried address information.

1407: The IMS-ALG 21 allocates an IMS-AGW 2 deployed on the satellite.

Specifically, after receiving the SDP offer from the calling UE, the IMS-ALG 21 may allocate the IMS-AGW 2 deployed on the satellite, to perform transmission of the media data between the calling UE and the called UE on the satellite. As shown in FIG. 14, it is assumed that a realm in which the IMS-AGW 2 is located is R1 and an address is IP3.

1408: The IMS-ALG 21 sends an SDP answer message to the IMS-ALG 22.

In response to the SDP offer, the IMS-ALG 21 sends the SDP answer message.

It can be learned from FIG. 14 that, because the realm in which the called side is located and the realm in which the calling side is located are R1, the IMS-ALG 21 sends the SDP answer message to the IMS-ALG 22. Carried address information may include the address IP3 of the IMS-AGW 2 and the domain R1 in which the IMS-AGW 2 is located.

1409: The IMS-ALG 22 sends the SDP answer message to the IMS-ALG 12.

1410: The IMS-ALG 12 releases the terrestrial access gateway.

For example, after the IMS-ALG 12 receives the SDP answer message, R2 and IP2 are removed from the SDP answer message. Therefore, the IMS-ALG 12 determines that transmission of the media data between the calling UE and the called UE can be performed (or met) via the satellite (for example, via the IMS-AGW deployed on the satellite, or via the IMS-AGW deployed on the satellite and another network element deployed on the satellite), and therefore releases the terrestrial access gateway, to be specific, releases a transport resource allocated by the terrestrial access gateway for transmission of the media data between the calling UE and the called UE.

1411: The IMS-ALG 12 forwards the SDP answer message to the IMS-ALG 11.

1412: The calling UE and the called UE perform USU communication via the IMS-ALG 11 and the IMS-ALG 12.

Specifically, the media data between the calling UE and the called UE is exchanged via the IMS-AGW 1 and the IMS-AGW 2.

The OMR mechanism is briefly described above with reference to FIG. 14. Embodiments of this application are not limited thereto. For detailed descriptions of the OMR mechanism, refer to related descriptions in TS23.228. Details are not described herein.

It may be understood that in some of the foregoing embodiments, the calling UE side is mainly used as an example for description. This is not limited. For example, the P-CSCF network element on the called UE side may alternatively determine whether USU communication is to be performed between the calling UE and the called UE. For another example, an IMS network element (for example, a P-CSCF network element) on the called UE side interacts with a core network element, so that USU communication is implemented via the core network element.

It may be further understood that "forwarding" is mentioned in some of the foregoing embodiments. For example, the P-CSCF network element forwards the SIP registration message. It may be understood that forwarding herein indicates that the P-CSCF network element forwards the received SIP registration message to another network element. Specifically, during forwarding, the P-CSCF network element may further process the SIP registration message (for example, add, remove, or modify a part or all of information in a message header) based on a transmission requirement.

It may be further understood that, in some of the foregoing embodiments, it is mentioned a plurality of times that the network element or the gateway is deployed on a satellite or the ground. For example, the gateway is deployed on the satellite. This may indicate that the gateway is disposed on the satellite, or may be considered as that the satellite has a function of the gateway. This is not limited herein.

It may be further understood that some optional features in embodiments of this application may be independent of other features in some scenarios, or may be combined with other features in some scenarios. This is not limited.

It may be further understood that, the solutions in embodiments of this application may be properly combined for use, and explanations or descriptions of terms in embodiments may be mutually referenced or explained in embodiments. This is not limited.

It may be further understood that in the foregoing method embodiments, methods and operations implemented by a device (for example, a terminal device or a network device) may alternatively be implemented by a component (for example, a chip or a circuit) of the device. This is not limited.

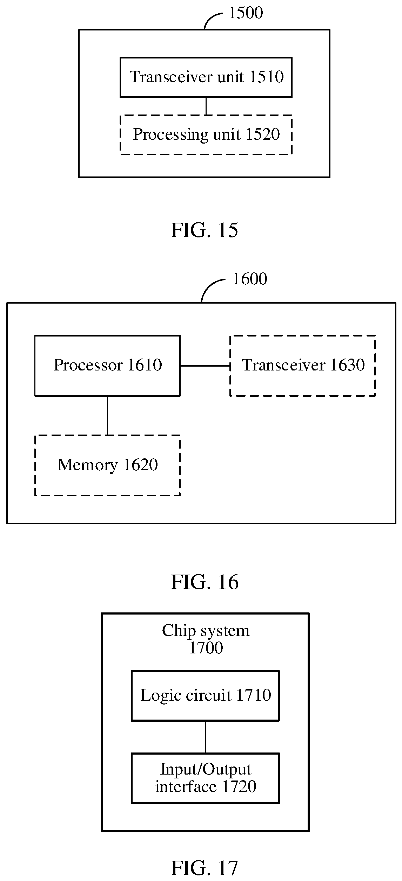

The method provided in embodiments of this application is described above in detail with reference to FIG. 5 to FIG. 14. The following describes in detail an apparatus provided in embodiments of this application with reference to FIG. 15 to FIG. 17. It should be understood that descriptions of apparatus embodiments correspond to descriptions of method embodiments. Therefore, for content that is not described in detail, refer to the foregoing method embodiments. For brevity, details are not described herein again.

FIG. 15 is a diagram of a communication apparatus 1500 according to an embodiment of this application. The apparatus 1500 includes a transceiver unit 1510. The transceiver unit 1510 may be configured to implement a corresponding communication function. The transceiver unit 1510 may also be referred to as a communication interface or a communication unit. Optionally, the apparatus 1500 further includes a processing unit 1520. The processing unit 1520 may be configured to perform processing, for example, determine an access gateway, or allocate a transport resource.

Optionally, the apparatus 1500 may further include a storage unit. The storage unit may be configured to store instructions and/or data. The processing unit 1520 may read the instructions and/or the data in the storage unit, to cause the apparatus to implement the foregoing method embodiments.

Optionally, the transceiver unit 1510 may include a receiving unit and a sending unit. The receiving unit may be configured to perform a receiving-related operation (for example, an operation of receiving data or a message), and the sending unit may be configured to perform a sending-related operation (for example, an operation of sending data or a message).

In a first possible design, the apparatus 1500 may be the first network element (for example, the session control network element) in the IMS in the foregoing embodiments. The apparatus 1500 may implement steps or procedures performed by the first network element (for example, the session control network element) in the IMS in the foregoing method embodiments. For example, the apparatus 1500 may implement the steps or procedures performed by the session control network element in the method embodiment shown in FIG. 5 or FIG. 8. Alternatively, the apparatus 1500 may implement the steps or procedures performed by the P-CSCF network element in the method embodiments shown in FIG. 6, FIG. 7, and FIG. 9 to FIG. 14. The transceiver unit 1510 may be configured to perform a receiving/sending-related operation (for example, an operation of sending and/or receiving data or a message) of the first network element (for example, the session control network element) in the IMS in the foregoing method embodiments. The processing unit 1520 may be configured to perform a processing-related operation or an operation other than the receiving/sending-related operation (for example, an operation other than sending and/or receiving the data or the message) of the first network element (for example, the session control network element) in the IMS in the foregoing method embodiments.

In a possible implementation, the transceiver unit 1510 is configured to receive a first request message from a first terminal. The first request message is used to request to create a session with a second terminal. The transceiver unit 1510 is further configured to send a second request message to a first gateway in an IMS. The second request message is used to request a transport resource, and the transport resource is used for transmission of media data between the first terminal and the second terminal. The first gateway is deployed on a satellite, and both the first terminal and the second terminal use satellite access.

In a second possible design, the apparatus 1500 may be the core network element in the foregoing embodiments, and the apparatus 1500 may implement the steps or procedures performed by the core network element in the foregoing method embodiments. For example, the apparatus 1500 may implement the steps or procedures performed by the core network element in the foregoing method embodiments shown in FIG. 8 to FIG. 13B. The transceiver unit 1510 may be configured to perform a receiving/sending-related operation (for example, an operation of sending and/or receiving data or a message) of the core network element in the foregoing method embodiments. The processing unit 1520 may be configured to perform a processing-related operation or an operation other than the receiving/sending-related operation (for example, the operation of sending and/or receiving the data or the message) of the core network element in the foregoing method embodiments.

In a possible implementation, the transceiver unit 1510 is configured to receive second indication information from a network element in an IMS. The second indication information indicates whether media data between a first terminal and a second terminal transits through a gateway deployed on the ground. The transceiver unit 1510 is further configured to send a response message to the network element in the IMS. The response message indicates that transmission of the media data between the first terminal and the second terminal is performed via a gateway deployed on a satellite, or the response message indicates that transmission of the media data between the first terminal and the second terminal is performed via the gateway deployed on the ground.

It should be understood that a specific process in which the units perform the foregoing corresponding steps is described in detail in the foregoing method embodiments. For brevity, details are not described herein.

It should be further understood that the apparatus 1500 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1500 may be specifically the communication apparatus in the foregoing embodiments, and may be configured to perform procedures and/or steps corresponding to the communication apparatus in the foregoing method embodiments. To avoid repetition, details are not described herein again.

The apparatus 1500 in the foregoing solutions has a function of implementing corresponding steps performed by the communication apparatus in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, the sending unit in the transceiver unit may be replaced by a transmitter, and the receiving unit in the transceiver unit may be replaced by a receiver machine), and another unit, for example, the processing unit, may be replaced by a processor, to separately perform the receiving/sending operation and the related processing operation in the method embodiments.

In addition, the transceiver unit 1510 may alternatively be a transceiver circuit (for example, may include a receiving circuit and a sending circuit), and the processing unit may be a processing circuit.

It should be noted that the apparatus in FIG. 15 may be the network element in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 16 is a diagram of another communication apparatus 1600 according to an embodiment of this application. The apparatus 1600 includes a processor 1610. The processor 1610 is coupled to a memory 1620. The memory 1620 is configured to store a computer program or instructions and/or data. The processor 1610 is configured to execute the computer program or the instructions stored in the memory 1620, or read data stored in the memory 1620, to perform the method in the foregoing method embodiments.

Optionally, there are one or more processors 1610.

Optionally, there are one or more memories 1620.

Optionally, the memory 1620 and the processor 1610 are integrated together or disposed separately.

Optionally, as shown in FIG. 16, the apparatus 1600 may further include a transceiver 1630, and the transceiver 1630 is configured to receive and/or send a signal. For example, the processor 1610 is configured to control the transceiver 1630 to receive and/or send the signal.

For example, the processor 1610 may have a function of the processing unit 1520 shown in FIG. 15, the memory 1620 may have a function of the storage unit, and the transceiver 1630 may have a function of the transceiver unit 1510 shown in FIG. 15.

In a solution, the apparatus 1600 is configured to implement operations performed by the communication apparatus in the foregoing method embodiments.

For example, the processor 1610 is configured to execute the computer program or the instruction stored in the memory 1620, to implement related operations of the first network element (for example, the session control network element (for example, the P-CSCF network element)) in the IMS in the foregoing method embodiments.

For another example, the processor 1610 is configured to execute the computer program or the instructions stored in the memory 1620, to implement related operations of the core network element in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described in this specification is intended to include, but is not limited to, these memories and any other appropriate type of memory.

FIG. 17 is a diagram of a chip system 1700 according to an embodiment of this application. The chip system 1700 (or may be referred to as a processing system) includes a logic circuit 1710 and an input/output interface (input/output interface) 1720.

The logic circuit 1710 may be a processing circuit in the chip system 1700. The logic circuit 1710 may be coupled to and connected to a storage unit, and invoke instructions in the storage unit, to cause the chip system 1700 to implement the methods and functions in embodiments of this application. The input/output interface 1720 may be an input/output circuit in the chip system 1700, and outputs information processed by the chip system 1700, or inputs to-be-processed data or signaling information into the chip system 1700 for processing.

Optionally, the logic circuit 1710 may be implemented by one or more processors, including the one or more processors or a processing part of the one or more processors.

Optionally, the input/output interface 1720 may include a transceiver circuit, a transceiver, an input/output circuit, or a communication interface.

In a solution, the chip system 1700 is configured to implement operations performed by the communication apparatus (for example, the network element (for example, the session control network element or the first gateway) in the IMS, the core network element, or the terminal device) in the foregoing method embodiments.

For example, the logic circuit 1710 is configured to implement processing-related operations performed by the communication apparatus (for example, the network element (for example, the session control network element or the first gateway) in the IMS, the core network element, or the terminal device) in the foregoing method embodiments. The input/output interface 1720 is configured to implement a sending and/or receiving-related operation performed by the communication apparatus (for example, the network element (for example, the session control network element or the first gateway) in the IMS, the core network element, or the terminal device) in the foregoing method embodiments.

An embodiment of this application further provides a computer-readable storage medium, and the computer-readable storage medium stores computer instructions used to implement the method performed by the communication apparatus (for example, the network element (for example, the session control network element or the first gateway) in the IMS, the core network element, or the terminal device) in the foregoing method embodiments.

For example, when the computer program is executed by a computer, the computer is caused to implement the method performed by the communication apparatus (for example, the network element (for example, the session control network element or the first gateway) in the IMS, the core network element, or the terminal device) in the foregoing method embodiments.

An embodiment of this application further provides a computer program product including instructions. When the instructions are executed by a computer, the method performed by the communication apparatus (for example, the network element (for example, the session control network element or the first gateway) in the IMS, the core network element, or the terminal device) in the foregoing method embodiments is implemented.

An embodiment of this application further provides a communication system. The communication system includes at least one of the session control network element, the first gateway, the core network element, the terminal device, and the like in the foregoing embodiments. For example, the system includes the terminal and the session control network element in FIG. 5. For another example, the system includes the IMS network element and the core network element in FIG. 8. For another example, the system includes at least one of the network elements in FIG. 6, FIG. 7, and FIG. 9 to FIG. 14.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the apparatus embodiments described above are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When the software is used for implementation, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a first network element in an internet protocol multimedia subsystem IMS, a first request message from a first terminal, wherein the first request message is used to request to create a session with a second terminal; and
sending, by the first network element in the IMS, a second request message to a first gateway in the IMS, wherein the second request message is used to request a transport resource, the transport resource is used for transmission of media data between the first terminal and the second terminal, the first gateway is deployed on a satellite, and both the first terminal and the second terminal use satellite access.

2. The method according to claim 1, wherein the media data between the first terminal and the second terminal does not transit through a gateway deployed on a ground in the IMS.

3. The method according to claim 1 or 2, wherein the sending, by the first network element in the IMS, the second request message to the first gateway in the IMS comprises at least one of the following:
when the first terminal uses satellite access, sending, by the first network element in the IMS, the second request message to the first gateway in the IMS; or
sending, by the first network element in the IMS, the second request message to the first gateway in the IMS based on subscription information of the first terminal or when media data of the first terminal is allowed not to transit through the gateway deployed on the ground, wherein the subscription information of the first terminal indicates that the media data of the first terminal is allowed not to transit through the ground and/or the first terminal uses satellite access.

4. The method according to claim 3, wherein the method further comprises:
receiving, by the first network element in the IMS, a registration request message from the first terminal, wherein the registration request message is used to request to register with the IMS;
sending, by the first network element in the IMS, the registration request message to a second network element in the IMS; and
receiving, by the first network element in the IMS, a registration response message from the second network element in the IMS, wherein the registration response message comprises the subscription information of the first terminal.

5. The method according to claim 3 or 4, wherein the first request message comprises an access type, and the access type indicates that the terminal device uses satellite access.

6. The method according to any one of claims 1 to 5, wherein the method further comprises:
sending, by the first network element in the IMS, a third request message to a second gateway in the IMS, wherein the third request message is used to request a transport resource, the transport resource is used for transmission of the media data between the first terminal and the second terminal, and the second gateway is deployed on the ground.

7. The method according to claim 6, wherein the method further comprises:
releasing the second gateway based on the first response message.

8. The method according to any one of claims 1 to 7, wherein the method further comprises:
receiving, by the first network element in the IMS, the first response message, wherein the first response message indicates that the media data between the first terminal and the second terminal does not transit through a gateway deployed on the ground.

9. The method according to any one of claims 1 to 5, wherein at least one network element in the IMS is deployed in a visited network, the at least one network element comprises the first network element and a border control network element, and at least one third network element in the IMS is deployed in a home network; and the method further comprises:
sending, by the first network element in the IMS, the first request message to the border control network element, to request the border control network element to determine, for the first terminal, a gateway deployed on the ground.

10. The method according to any one of claims 1 to 9, wherein at least one network element in the IMS is deployed in a visited network, the at least one network element comprises the first network element, and at least one third network element in the IMS is deployed in a home network; and the method further comprises:
sending, by the first network element in the IMS, first indication information to a network element in the at least one third network element, wherein the first indication information indicates that visited network routing is performed on the media data between the first terminal and the second terminal.

11. The method according to any one of claims 1 to 10, wherein the method further comprises:
sending, by the first network element in the IMS, second indication information to a network element in a first network, wherein the second indication information indicates whether the media data between the first terminal and the second terminal transits through the gateway deployed on the ground.

12. The method according to claim 11, wherein the sending, by the first network element in the IMS, the second indication information to the network element in the first network comprises at least one of the following:
when the first terminal uses satellite access, sending, by the first network element in the IMS, the second indication information to the network element in the first network; or
sending, by the first network element in the IMS, the second indication information to the network element in the first network based on the subscription information of the first terminal or when the media data of the first terminal is allowed not to transit through the gateway deployed on the ground, wherein the subscription information of the first terminal indicates that the media data of the first terminal is allowed not to transit through the ground and/or the first terminal uses satellite access; or
when the first terminal and the second terminal are served by a same policy control network element and/or session control network element, sending, by the first network element in the IMS, the second indication information to the network element in the first network.

13. The method according to any one of claims 1 to 12, wherein the method further comprises:
when transmission of the media data between the first terminal and the second terminal is performed via the first gateway, sending a second response message to the first terminal, wherein the second response message comprises an address of the first gateway.

14. The method according to any one of claims 1 to 13, wherein the first terminal and the second terminal meet any one of the following:
the first terminal and the second terminal are served by a same satellite; or
the first terminal and the second terminal are served by different satellites, and there is an inter-satellite link between the different satellites.

15. The method according to any one of claims 1 to 14, wherein the first network element in the IMS is a session control network element in the IMS, and/or the first network element in the IMS is deployed on the satellite.

16. A communication method, wherein the method comprises:
receiving, by a network element in a first network, second indication information from a network element in an IMS, wherein the second indication information indicates whether media data between a first terminal and a second terminal transits through a gateway deployed on a ground; and
sending, by the network element in the first network, a response message to the network element in the IMS, wherein the response message indicates that transmission of the media data between the first terminal and the second terminal is performed via a gateway deployed on a satellite, or the response message indicates that transmission of the media data between the first terminal and the second terminal is performed via the gateway deployed on the ground.

17. The method according to claim 16, wherein both the first terminal and the second terminal use satellite access.

18. The method according to claim 16 or 17, wherein
when the first terminal and the second terminal are served by a same policy control network element, the response message indicates that transmission of the media data between the first terminal and the second terminal is performed via the gateway deployed on the satellite; or
when the first terminal and the second terminal are served by a same user plane network element, the response message indicates that transmission of the media data between the first terminal and the second terminal is performed via the gateway deployed on the satellite; or
when there is an inter-satellite link between the first terminal and the second terminal, the response message indicates that transmission of the media data between the first terminal and the second terminal is performed via the gateway deployed on the satellite.

19. A communication method, wherein the method comprises:
receiving, by a first gateway in an internet protocol multimedia subsystem IMS, media data from a first terminal; and
sending, by the first gateway in the IMS, the media data to a second terminal over an inter-satellite link, wherein the first gateway is deployed on a satellite, and both the first terminal and the second terminal use satellite access.

20. The method according to claim 19, wherein before receiving, by the first gateway in the IMS, the media data from the first terminal, the method further comprises:
receiving, by the first gateway in the IMS, a second request message from a first network element in the IMS, wherein the second request message is used to request a transport resource, and the transport resource is used for transmission of media data between the first terminal device and the second terminal device.

21. A communication method, wherein the method comprises:
receiving, by a first network element in an internet protocol multimedia subsystem IMS, a first request message from a first terminal, wherein the first request message is used to request to create a session with a second terminal; and
sending, by the first network element in the IMS, a second request message to a first gateway, wherein the second request message is used to request a transport resource, the transport resource is used for transmission of media data between the first terminal device and a second terminal device, the first gateway is deployed on a satellite, and both the first terminal and the second terminal use satellite access; and
in response to the second request message, allocating, by the first gateway, the transport resource to the media data between the first terminal device and the second terminal device.

22. A communication apparatus, wherein the apparatus is deployed on a satellite, the apparatus comprises a first gateway in an IMS, and the first gateway is configured for transmission of media data between terminals using satellite access.

23. The communication apparatus according to claim 22, wherein the apparatus further comprises a first network element in the IMS, and the first network element in the IMS communicates with the first gateway.

24. The communication apparatus according to claim 22 or 23, wherein
the apparatus further comprises a user plane network element in a first network, or the apparatus further comprises the user plane network element in the first network and an access network element in the first network, wherein
the terminal communicates with the first network via the user plane network element and/or the access network element.

25. The communication apparatus according to any one of claims 22 to 24, wherein the first network element in the IMS is configured to perform the method according to any one of claims 1 to 15.

26. A communication apparatus, comprising a module or a unit configured to perform the method according to any one of claims 1 to 21.

27. A communication apparatus, comprising a processor, wherein the processor is configured to execute a computer program or instructions stored in a memory, to cause the apparatus to perform the method according to any one of claims 1 to 21.

28. The apparatus according to claim 27, wherein the apparatus further comprises the memory and/or a communication interface, and the communication interface is coupled to the processor; and
the communication interface is configured to input and/or output information.

29. A computer-readable storage medium, wherein the computer-readable storage medium stores a computer program or instructions, and when the computer program or the instructions are run on a communication apparatus, the communication apparatus is caused to perform the method according to any one of claims 1 to 21.

30. A computer program product, wherein the computer program product comprises a computer program or instructions used to perform the method according to any one of claims 1 to 21.

31. A communication system, wherein the communication system comprises a first gateway and a first network element in an internet protocol multimedia subsystem IMS, and the first network element in the IMS is configured to perform the method according to any one of claims 1 to 15.

32. The communication system according to claim 31, wherein the communication system further comprises a network element in a first network, and the network element in the first network is configured to perform the method according to any one of claims 16 to 18.

33. The communication system according to claim 31 or 32, wherein the communication system further comprises a user plane network element and/or an access network element in the first network, and a terminal communicates with the first network via the user plane network element and/or the access network element.
